# EUROPEAN PATENT APPLICATION

(11) **EP 4 610 722 A1**
(43) Date of publication of application: **03.09.2025**
(21) Application number: 23883073.1
(22) Date of filing: 24.10.2023
(51) Int. Cl.: G03B 3/10, G03B 13/36, G03B 5/04, G03B 17/12, H04N 23/54, H04N 23/55, G02B 7/02, G02B 7/09

(54) **LENS DRIVING DEVICE, CAMERA DEVICE, AND OPTICAL DEVICE**

(30) Priority: 24.10.2022 KR 20220137832; 12.01.2023 KR 20230005016
(71) Applicant: LG INNOTEK CO. LTD, Gangseo-gu Seoul 07796 (KR)
(72) Inventor: LEE, Sung Guk, Seoul 07796 (KR); YOO, Kyoung Ho, Seoul 07796 (KR)
(74) Representative: DREISS Patentanwälte PartG mbB
(86) International application number: PCT/KR2023/016590
(87) International publication number: WO 2024/090968

(57) **Abstract**

A first embodiment of the present invention relates to a lens driving device comprising: a fixed unit; a moving unit arranged in the fixed unit; a coil arranged in the fixed unit; a first magnet, which is arranged in the moving unit and interacts with the coil; a second magnet arranged in the fixed unit; and a ball arranged between the fixed unit and the moving unit, wherein the second magnet presses the first magnet such that the ball is pressed between the fixed unit and the moving unit.

## Description

### [Technical Field]

The present embodiment relates to a lens driving device, a camera device, and an optical device.

### [Background Arts]

A camera device is a device that takes pictures or videos of subjects and is installed in optical devices such as smartphones, drones, and vehicles.

The camera device is equipped with an autofocus function that automatically adjusts a focus depending on the distance of a subject. The auto-focus function is performed as a lens moves in the optical axis direction relative to an image sensor, and the movement of the lens in the optical axis direction can be guided by a ball. At this time, the attraction between a magnet and a yoke can be used to keep the ball between a fixed part and a moving part.

However, in this case, problems may occur because the lens may roll due to the moment generated by the ball.

(Patent Document 1) KR 10-2015-0118005 A

### [Detailed Description of the Invention]

### [Technical Subject]

The first embodiment of the present invention aims to provide a lens driving device that minimizes the moment generated by a ball.

The first embodiment of the present invention aims to provide a lens driving device that minimizes the rolling of the lens.

The first embodiment of the present invention aims to provide a lens driving device that is reduced in size in the horizontal direction by the thickness of a yoke.

The first embodiment of the present invention provides a lens driving device that can be positioned at various locations, such as the center of gravity of a moving unit or the opposite side of the driving magnet, as needed.

The second embodiment of the present invention provides a lens driving device that minimizes the generation of moments by the ball as the ball is disposed close to the optical axis.

A second embodiment of the present invention provides a lens driving device that minimizes rolling, i.e. rotation phenomenon, of the lens.

A second embodiment of the present invention provides a lens driving device that can place the ball in various positions, such as at the center of gravity of the moving unit or on the opposite side of the driving magnet, as required.

### [Technical Solution]

A first embodiment of the present invention relates to a lens driving device comprising: a fixed unit; a moving unit disposed in the fixed unit; a coil disposed in the fixed unit; a first magnet, which is disposed in the moving unit and interacts with the coil; a second magnet disposed in the fixed unit; and a ball disposed between the fixed unit and the moving unit, wherein the second magnet presses the first magnet such that the ball is pressed between the fixed unit and the moving unit.

Preferably, but not necessarily, when current is applied to the coil, the first magnet may move in the optical axis direction.

Preferably, but not necessarily, the coil may overlap the first magnet in a first axis direction perpendicular to the optical axis, and the second magnet may overlap the first magnet in the first axis direction.

Preferably, but not necessarily, the second magnet may comprise a first portion that overlaps with the first magnet in the first axis direction and a second portion that does not overlap with the first magnet in the first axis direction.

Preferably, but not necessarily, the second magnet may overlap with the coil in a second axis direction perpendicular to the optical axis direction and the first axis direction.

Preferably, but not necessarily, the second magnet may comprise a first unit magnet disposed on one side of the coil and a second unit magnet disposed on the other side of the coil.

Preferably, but not necessarily, the second magnet may be disposed so that a repulsion is generated with the first magnet.

Preferably, but not necessarily, the first magnet may comprise a first magnet unit comprising an N pole and an S pole, a second magnet unit comprising an S pole and an N pole, and a neutral unit disposed between the first magnet unit and the second magnet unit.

Preferably, but not necessarily, the second magnet may comprise a first magnet unit comprising an N pole and an S pole, a second magnet unit comprising an S pole and an N pole, and a neutral unit disposed between the first magnet unit of the second magnet and the second magnet unit of the second magnet, the N pole of the first magnet unit of the second magnet may face the N pole of the first magnet unit of the first magnet, and the S pole of the second magnet unit of the second magnet may face the S pole of the second magnet unit of the first magnet.

Preferably, but not necessarily, in the optical axis direction, the length of the neutral unit of the second magnet may be longer than the length of the neutral unit of the first magnet.

Preferably, but not necessarily, when the first magnet is moved as far as possible to the lower side of the optical axis direction, the first boundary between the first magnet unit of the first magnet and the neutral unit of the first magnet may be disposed at the same height or lower than the first boundary between the first magnet unit of the second magnet and the neutral unit of the second magnet.

Preferably, but not necessarily, when the first magnet is moved as far as possible in the optical axis direction, the second boundary between the second magnet unit of the first magnet and the neutral unit of the first magnet may be disposed at the same height as or higher than the second boundary between the second magnet unit of the second magnet and the neutral unit of the second magnet.

Preferably, but not necessarily, in the optical axis direction, the length of the second magnet may be longer than the length of the first magnet, and in the optical axis direction, the length of the first magnet unit of the second magnet may be shorter than the length of the first magnet unit of the first magnet.

A lens driving device according to the first embodiment of the present invention may comprise: a fixed unit; a moving unit disposed within the fixed unit; a coil disposed in the fixed unit; a magnet disposed in the moving unit and interacting with the coil; and a ball disposed between the fixed unit and the moving unit, wherein the fixed unit comprises a first sidewall on which the coil is disposed, a second sidewall disposed opposite to the first sidewall, and a protrusion that is disposed in a first direction in which the first sidewall faces the second sidewall and overlaps between the first sidewall and the second sidewall, and in the first direction, the moving unit comprises a protrusion that is disposed between the first sidewall of the fixed unit and the protrusion, and the ball may be disposed between the protrusion of the moving unit and the protrusion of the fixed unit.

A camera device according to a first embodiment of the present invention may comprise: a printed circuit board; an image sensor disposed on the printed circuit board; a lens driving device disposed on the printed circuit board; and a lens coupled to the lens driving device.

An optical device according to a first embodiment of the present invention may comprise: a main body; a camera device disposed in the main body; and a display that is disposed in the main body and outputs one or more of a video and an image captured by the camera device.

A lens driving device according to a second embodiment of the present invention may comprise: a fixed unit; a moving unit disposed in the optical axis direction and movable within the fixed unit; a coil disposed in the fixed unit; a first magnet disposed in the moving unit and disposed to face the coil in a first direction perpendicular to the optical axis direction; a ball disposed between the fixed unit and the moving unit, and a second magnet disposed at the fixed unit and subjected to a repulsion by the first magnet, wherein the coil may be overlapped with the second magnet in the first direction.

Preferably, but not necessarily, the second magnet may pressurize the first magnet so that the ball is pressed between the fixed unit and the moving unit.

Preferably, but not necessarily, at least a portion of the coil may be disposed between the first magnet and the second magnet in the first direction.

Preferably, but not necessarily, in the optical axis direction, the length of the second magnet may be longer than that of the first magnet.

Preferably, but not necessarily, an upper surface of the second magnet may be disposed higher than an upper surface of the first magnet, and a lower surface of the second magnet may be disposed lower than the lower surface of the first magnet.

Preferably, but not necessarily, the fixed unit may comprise a base and a substrate disposed on the base, the coil may be disposed on an inner surface of the substrate, and the second magnet may be disposed on an outer surface of the substrate.

Preferably, but not necessarily, in the direction of the optical axis and the second direction perpendicular to the first direction, the length of the second magnet may be 15 to 40% of the first magnet.

Preferably, but not necessarily, in the first direction, the thickness of the second magnet may be smaller than the thickness of the first magnet.

Preferably, but not necessarily, the second magnet may comprise a first magnet unit comprising an N pole and an S pole, a second magnet unit comprising an S pole and an N pole disposed on the first magnet unit, and a neutral unit disposed between the first magnet unit and the second magnet unit, and in the optical axis direction, the length of the second magnet unit may be 10 to 50% of the length of the neutral unit.

Preferably, but not necessarily, the first magnet may comprise a first magnet unit comprising an N pole and an S pole, a second magnet unit disposed on the first magnet unit and comprising an S pole and an N pole, and a neutral unit disposed between the first magnet unit and the second magnet unit, and in the direction of the optical axis, the length of the neutral unit of the second magnet may be longer than the length of the neutral unit of the first magnet.

Preferably, but not necessarily, when a positive current is applied to the coil and the moving unit moves to the upper side of the optical axis direction to the maximum, an upper end of the neutral unit of the first magnet is disposed at the same or lower height as the upper end of the neutral unit of the second magnet, and when a reverse current is applied to the coil and the moving unit moves to the lower side of the optical axis as much as possible, a lower end of the neutral unit of the first magnet may be disposed at the same or higher height as the lower end of the neutral unit of the second magnet.

Preferably, but not necessarily, the ball may be spaced apart from the optical axis at a first distance, and at least a portion of the first magnet may be spaced apart from the optical axis and the first distance to a greater extent.

Preferably, but not necessarily, the distance between the ball and the optical axis may be the same as the distance between the second magnet and the optical axis.

A camera device according to a second embodiment of the present invention may comprise: a printed circuit board; an image sensor disposed on the printed circuit board; a lens driving device disposed on the printed circuit board; and a lens coupled to the lens driving device.

An optical device according to the second embodiment of the present invention may comprise: a main body; a camera device disposed in the main body; and a display disposed in the main body and outputting one or more of a video and an image captured by the camera device.

### [Advantageous Effects]

The first embodiment of the present invention can minimize the moment generated by the ball. This minimizes the rolling or rotation phenomenon of the lens.

The first embodiment of the present invention can reduce the horizontal size of the lens driving device as much as the thickness of the yoke.

The first embodiment of the present invention can allow the ball to be disposed in various positions, such as the center of gravity of the moving unit or the opposite side of the driving magnet, as needed, thereby increasing the degree of design freedom. More specifically, the ball can be disposed on a virtual plane that passes through the center of gravity of the moving unit and parallel to the inner surface of the magnet.

Through the second embodiment of the present invention, the moment caused by the ball can be minimized as the ball is disposed close to the optical axis. This minimizes the rolling or rotation phenomenon of the lens.

Through the second embodiment of the present invention, the design freedom of the ball placement position can be improved.

### [Brief Description of Drawings]

FIG. 1 is a perspective view of the lens driving device according to a first embodiment of the present invention.
FIG. 2 is a cross-sectional view of FIG. 1 from A-A.
FIG. 3 is a cross-sectional perspective view of the lens driving device according to the first embodiment of the present invention.
FIG. 4 is a cross-sectional view of FIG. 1 from B-B.
FIGS. 5 and 6 are cross-sectional views of the lens driving device according to the first embodiment of the present invention.
FIG. 7 is a cross-sectional view of the lens driving device according to the first embodiment of the present invention, cut perpendicular to the optical axis.
FIG. 8 is an exploded perspective view of the lens driving device according to the first embodiment of the present invention.
FIG. 9 is an exploded perspective view of the lens driving device in a different direction from that of FIG. 8.
FIG. 10 is a perspective view of the lens driving device according to the first embodiment of the present invention with the cover removed.
FIG. 11 is a top view of the lens driving device according to the first embodiment of the present invention with the cover removed.
FIG. 12 is a bottom perspective view of the lens driving device according to the first embodiment of the present invention with the cover removed.
FIG. 13 is a partial perspective view of the lens driving device according to the first embodiment of the present invention with the cover removed.
FIG. 14 is a perspective view showing the fixed unit of the lens driving device and related configuration according to the first embodiment of the present invention.
FIG. 15 is a partial enlarged view of FIG. 14 from a different direction.
FIG. 16 is a perspective view showing the moving unit of the lens driving device and related configuration according to the first embodiment of the present invention.
FIG. 17 is a perspective view from a different direction than that of FIG. 16.
FIG. 18 is a perspective view showing the magnet and coil of the lens driving device and related configuration according to the first embodiment of the present invention.
FIG. 19 is a perspective view of FIG. 18 with the driving magnet omitted.
FIG. 20 is a top view of FIG. 18.
FIG. 21 is a drawing showing a driving magnet and a repulsion magnet of the lens driving device according to the first embodiment of the present invention. (a) is a drawing showing the driving magnet and the repulsion magnet when the driving magnet is in its initial state, i.e. before moving. (b) is a drawing showing the driving magnet and the repulsion magnet when the driving magnet is maximally moved upward in the optical axis direction. (c) is a drawing showing the driving magnet and the repulsion magnet when the driving magnet is maximally moved downward in the optical axis direction.
FIG. 22 is a conceptual diagram showing the pressing of the ball by the repulsive force between the driving magnet and the repulsion magnet in the first embodiment of the present invention.
FIGS. 23 to 25 are drawings for explaining the autofocus operation of the lens driving device according to the first embodiment of the present invention. FIG. 23 shows a cross-sectional view of the moving unit in the initial state when no current is applied to the coil. FIG. 24 shows a cross-sectional view of the moving unit moving upward in the optical axis direction when a forward current is applied to the coil. FIG. 25 shows a cross-sectional view of the moving unit moving downward in the optical axis direction when a reverse current is applied to the coil.
FIG. 26 is an exploded perspective view of the camera device according to a first embodiment of the present invention.
FIG. 27 is a perspective view of the optical device according to a first embodiment of the present invention.
FIG. 28 is a perspective view of the optical device according to a variant example.
FIG. 29 is a perspective view of the lens driving device according to a second embodiment of the present invention.
FIG. 30 is a cross-sectional view taken from A-A in FIG. 29.
FIG. 31 is a cross-sectional view taken from B-B in FIG. 29.
FIGS. 32 to 34 are cross-sectional views of the lens driving device according to a second embodiment of the present invention, cut at different parts and viewed from different angles.
FIG. 35 is a cross-sectional view of a lens driving device according to a second embodiment of the present invention, cut perpendicular to the optical axis and viewed from above.
FIG. 36 is an exploded perspective view of a lens driving device according to a second embodiment of the present invention.
FIG. 37 is an exploded perspective view of the lens driving device in a different direction from that of FIG. 36.
FIG. 38 is a perspective view of the lens driving device according to a second embodiment of the present invention with the cover omitted.
FIG. 39 is a perspective view of the lens driving device according to a second embodiment of the present invention with the moving unit and related configuration omitted.
FIG. 40 is a perspective view of FIG. 39 from a different angle.
FIG. 41 is a perspective view of FIG. 40 with the ball, substrate, and repulsion magnet omitted.
FIG. 42 is a perspective view showing the moving unit of the lens driving device and related configuration according to a second embodiment of the present invention.
FIG. 43 is a perspective view of FIG. 42 from a different angle.
FIG. 44 is a front view of the moving unit, the driving unit, and the repulsion magnet of the lens driving device according to a second embodiment of the present invention.
FIG. 45 is a cross-sectional view showing the driving magnet and the repulsion magnet of a lens driving device according to a second embodiment of the present invention and their related configurations.
FIG. 46 is a perspective view of the driving magnet and the repulsion magnet of a lens driving device according to a second embodiment of the present invention.
FIG. 47 is a drawing showing the driving magnet and the repulsion magnet of the lens driving device according to a second embodiment of the present invention. (a) is a drawing showing the driving magnet and the repulsion magnet when the driving magnet is in its initial state, i.e. before moving. (b) is a drawing showing the driving magnet and the repulsion magnet when the driving magnet is maximally moved upward in the optical axis direction. (c) is a drawing showing the driving magnet and the repulsion magnet when the driving magnet is maximally moved downward in the optical axis direction.
FIG. 48 is a cross-sectional view for comparing the distance between the optical axis and each component in a lens driving device according to a second embodiment of the present invention.

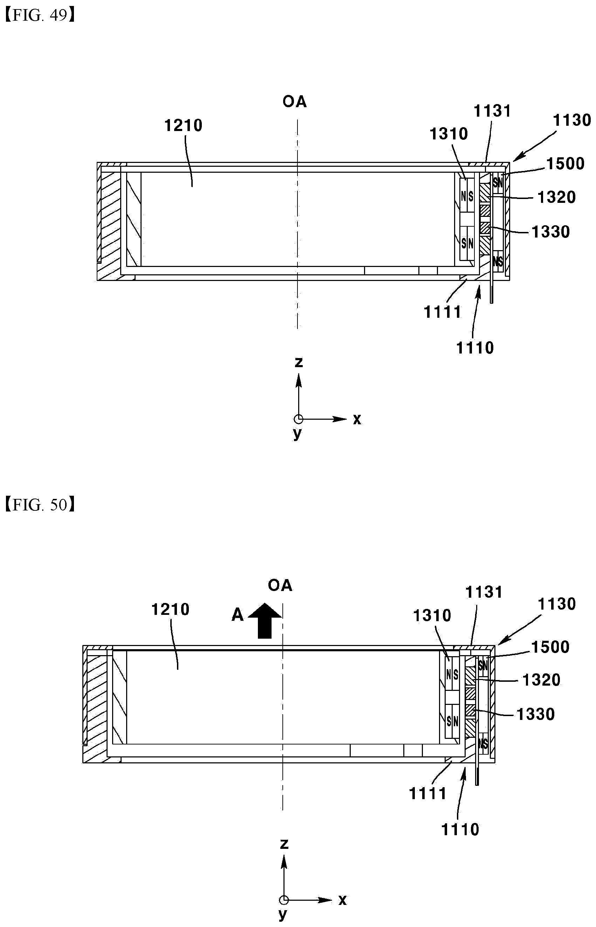

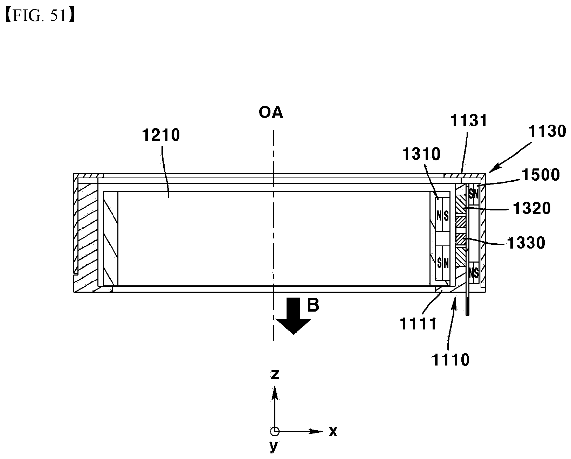

FIGS. 49 to 51 are drawings for explaining the autofocus driving of a lens driving device according to a second embodiment of the present invention. FIG. 49 is a cross-sectional view showing the state of the moving unit in the initial state when no current is applied to the coil. FIG. 50 is a cross-sectional view showing the state of the moving unit moving upward in the optical axis direction when a forward current is applied to the coil. FIG. 51 is a cross-sectional view showing the state of the moving unit moving downward in the optical axis direction when a reverse current is applied to the coil.
FIG. 52 is an exploded perspective view of the camera device according to a second embodiment of the present invention.
FIG. 53 is a perspective view of the optical device according to a second embodiment of the present invention.
FIG. 54 is a perspective view of the optical device according to a variant example.

### [Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (comprising technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may comprise the plural unless the context otherwise requires, and references to "at least one (or more) of A and (or) B and C" may comprise one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can comprise cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" comprises not only when two components are in direct contact with each other, but also when one or more other components are formed or disposed between the two components. Furthermore, when expressed as "above" or "below", it may comprise the meaning of upward as well as downward with respect to a single component.

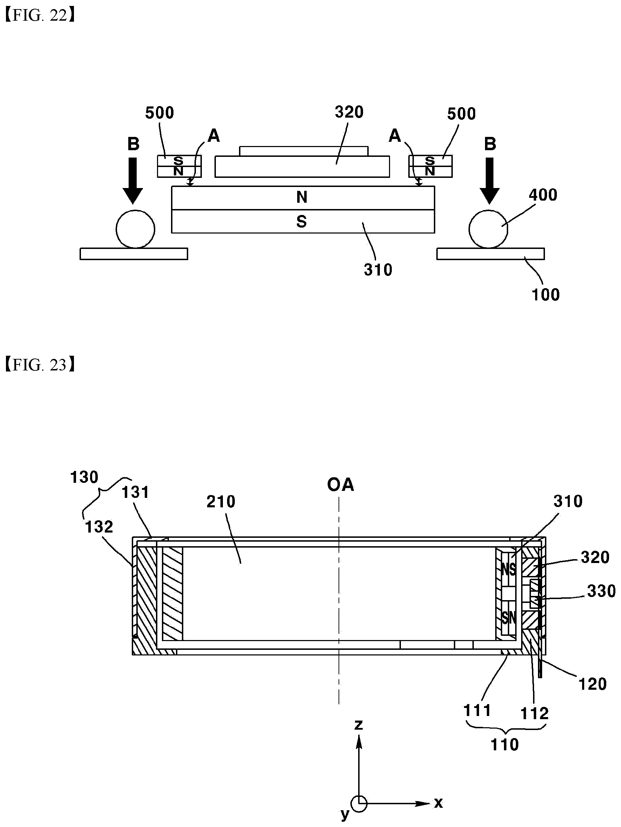

The 'optical axis (see OA of FIG.23) direction' used below is defined as the optical axis direction of a lens and/or image sensor coupled to the lens driving device.

The 'vertical direction' used below may be parallel to or in the same direction as the optical axis direction. The vertical direction may correspond to the 'z-axis direction'. The 'horizontal direction' used below may be a direction perpendicular to the vertical direction. In other words, the horizontal direction may be a direction perpendicular to the optical axis. Therefore, the horizontal direction may comprise the 'x-axis direction' and the 'y-axis direction'.

The 'auto focus (AF) function' used below is defined as a function that automatically adjusts the focus on a subject by moving the lens in the optical axis direction according to the distance of the subject so that a clear image of the subject can be obtained on the image sensor. In addition, 'closed-loop auto focus (CLAF) control' is defined as feedback control of the position of the lens in real time by detecting the distance between the image sensor and the lens to improve the accuracy of focus adjustment.

Hereinafter, one of the 'x-axis' and 'y-axis' may be referred to as the 'first axis' and the other as the 'second axis.'

Hereinafter, one of the "driving magnet (310)" and "repulsion magnet (500)" may be referred to as the "first magnet" and the other as the ' second magnet.'

Hereinafter, one of the 'lower magnet unit (311)' and the 'upper magnet unit (312)' may be referred to as the 'first magnet unit' and the other as the 'second magnet unit.'

Hereinafter, one of the 'lower magnet unit (510)' and the 'upper magnet unit (520)' may be referred to as the 'first magnet unit' and the other as the 'second magnet unit.'

Hereinafter, one of the 'driving magnet (1310)' and the 'repulsion magnet (1500)' may be referred to as the 'first magnet' and the other as the 'second magnet.'

Hereinafter, one of the 'lower magnet unit (1311)' and the 'upper magnet unit (1312)' may be referred to as the 'first magnet unit' and the other as the 'second magnet unit'

Hereinafter, one of the 'lower magnet unit (1510)' and the 'upper magnet unit (1520)' may be referred to as the 'first magnet unit' and the other as the 'second magnet unit.'

The following describes the configuration of the lens driving device according to a first embodiment of the present invention with reference to the drawings.

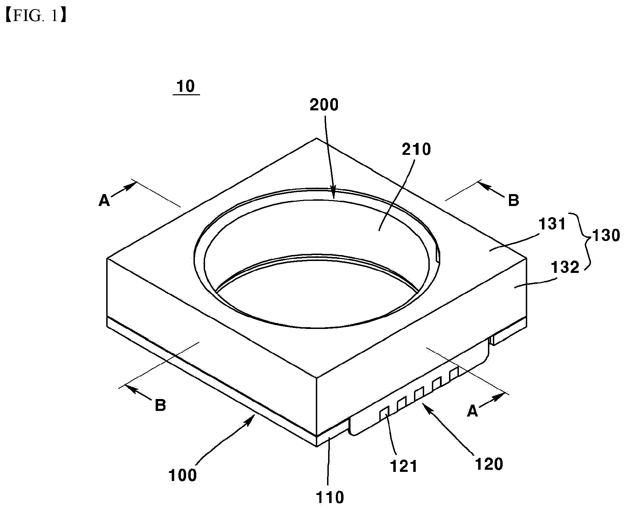

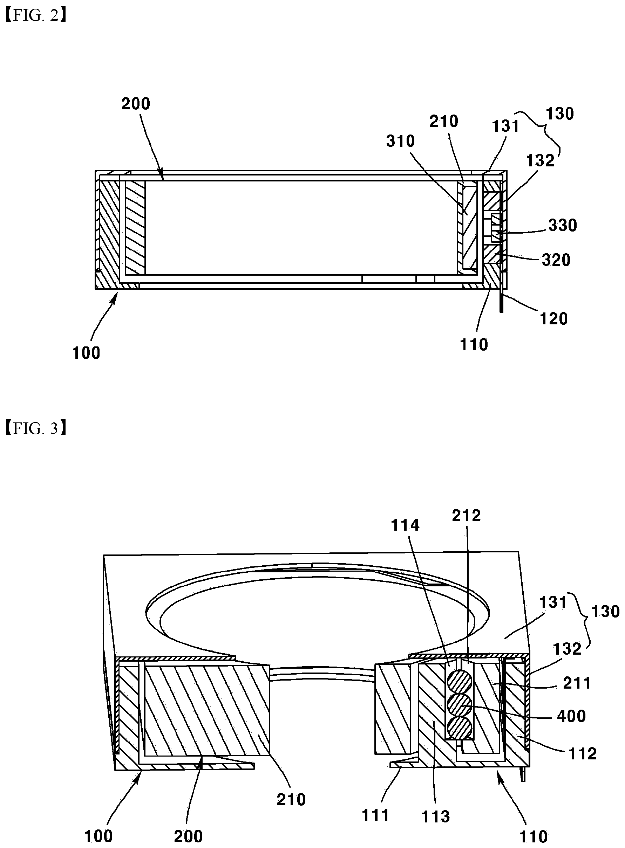

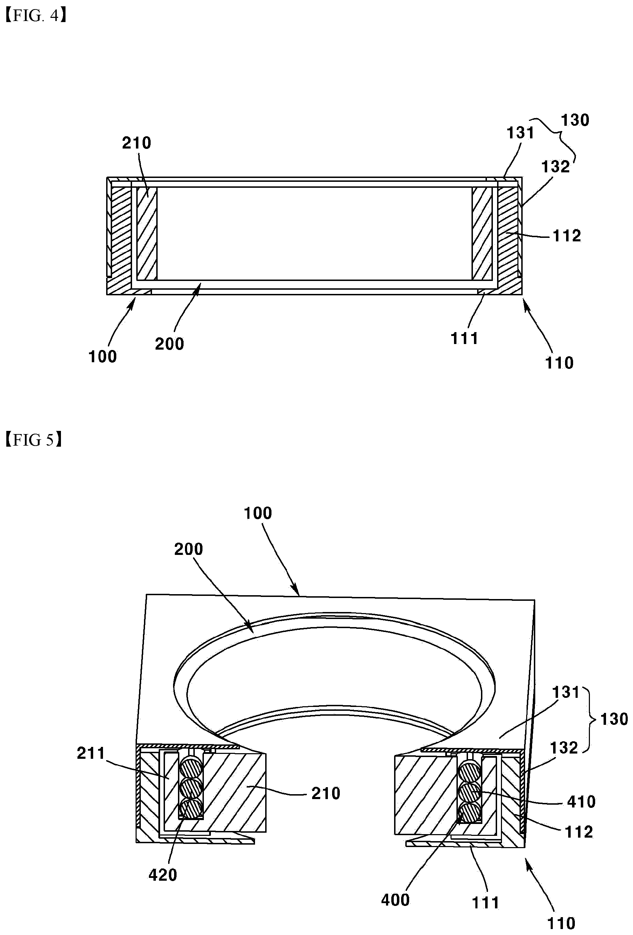

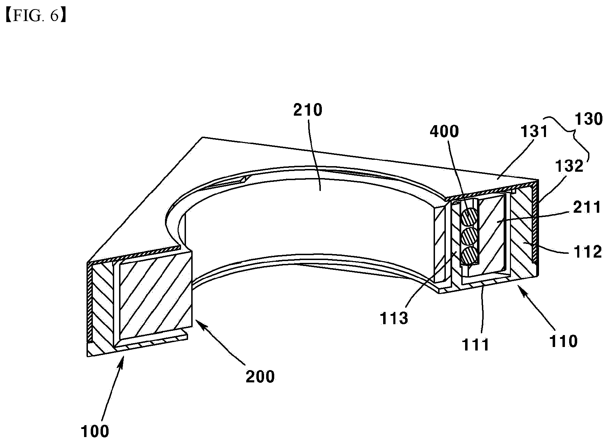

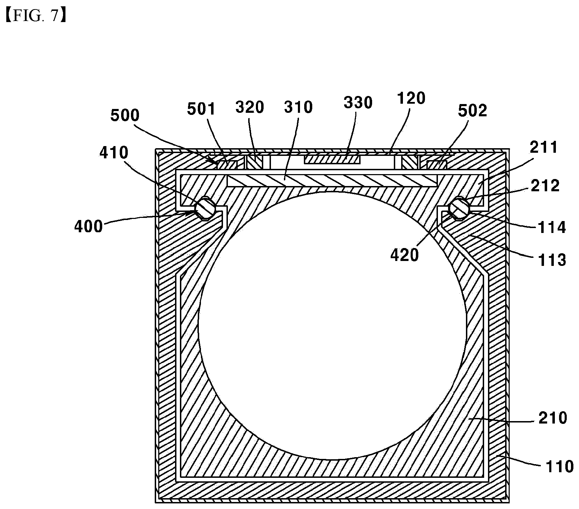

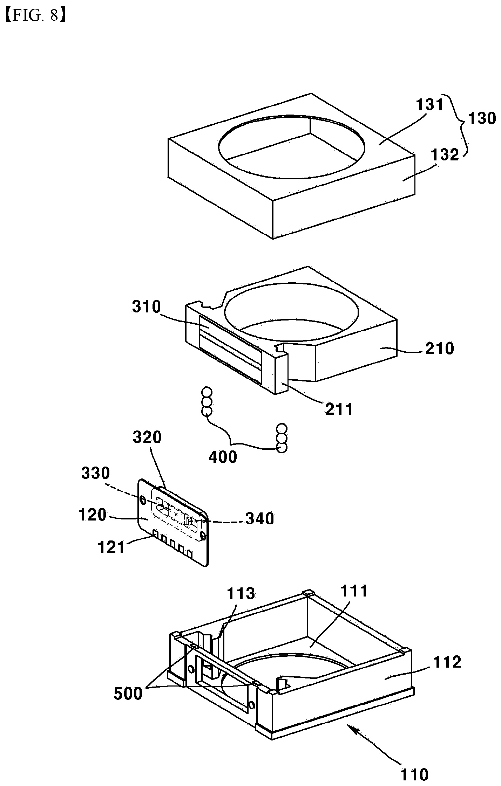

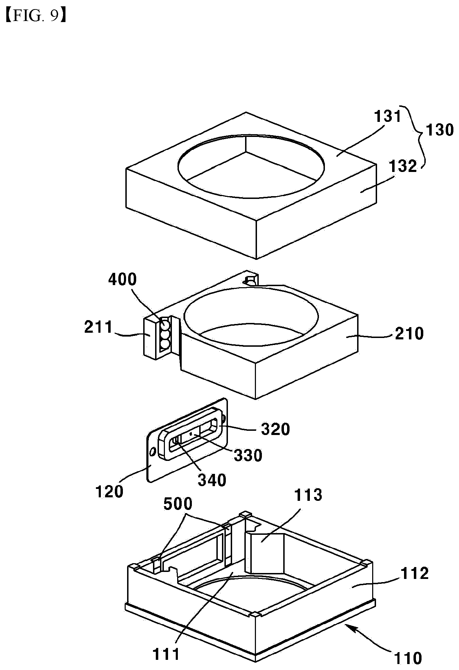

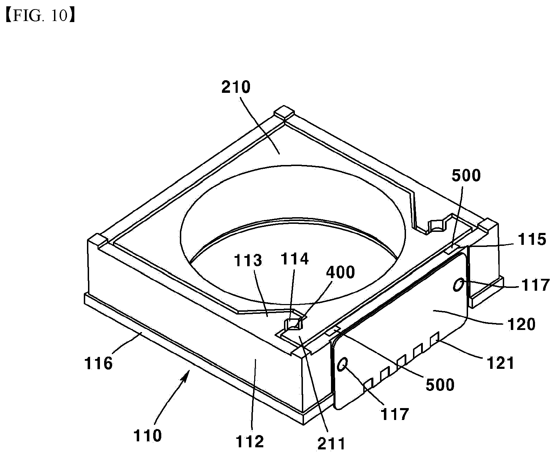

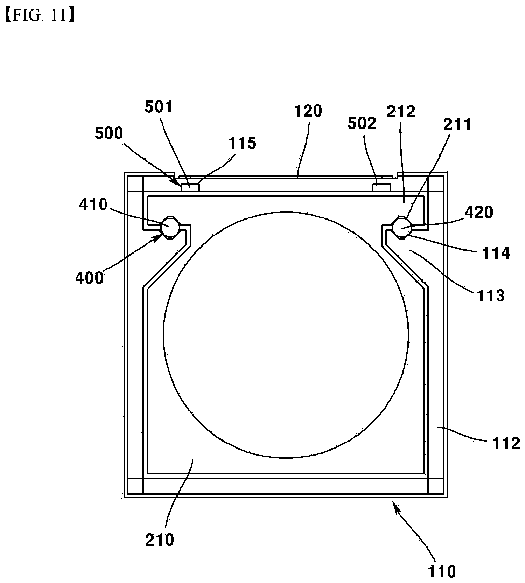

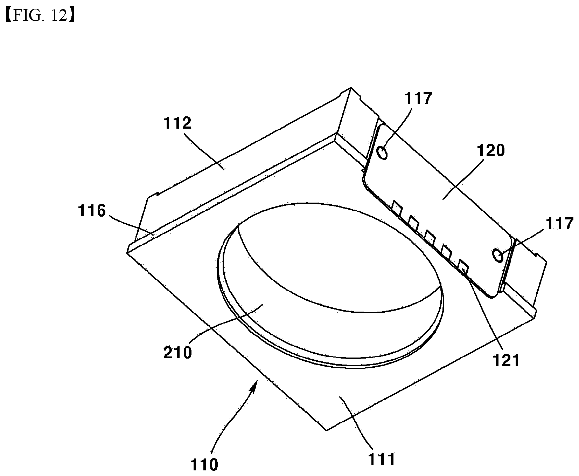

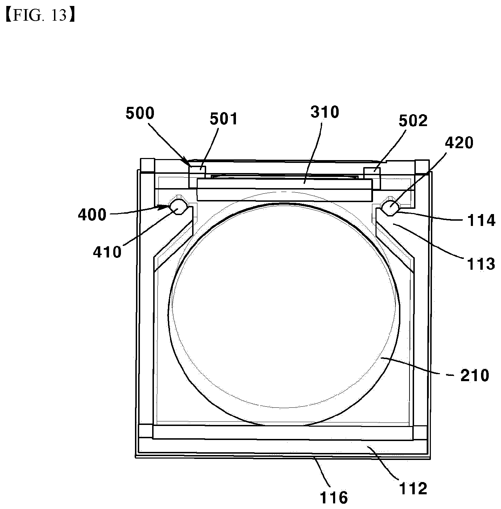

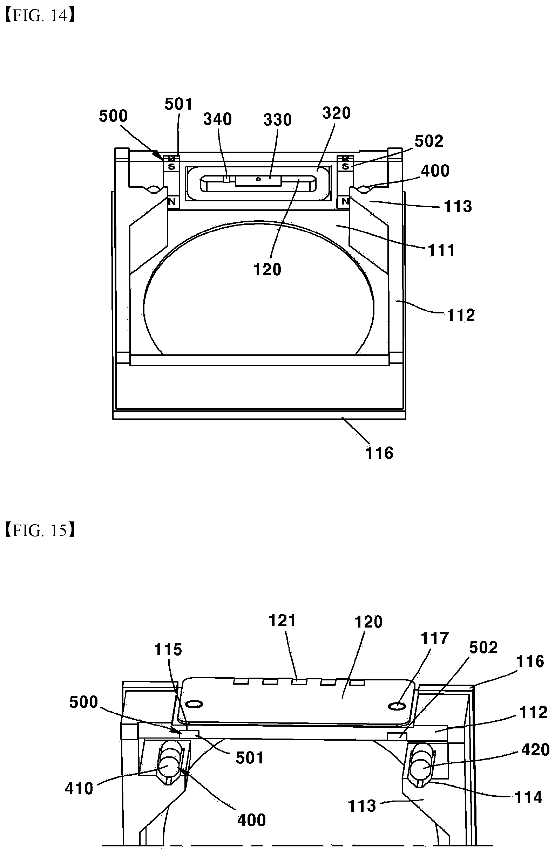

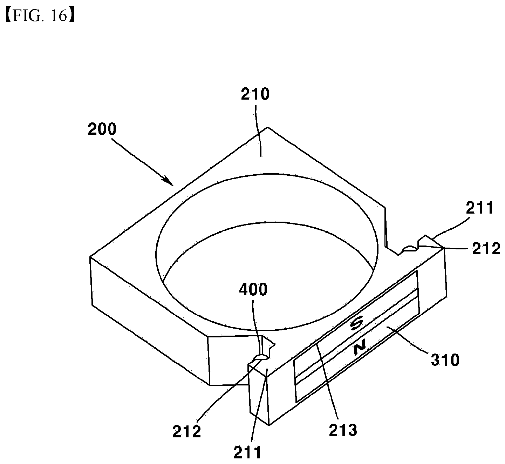

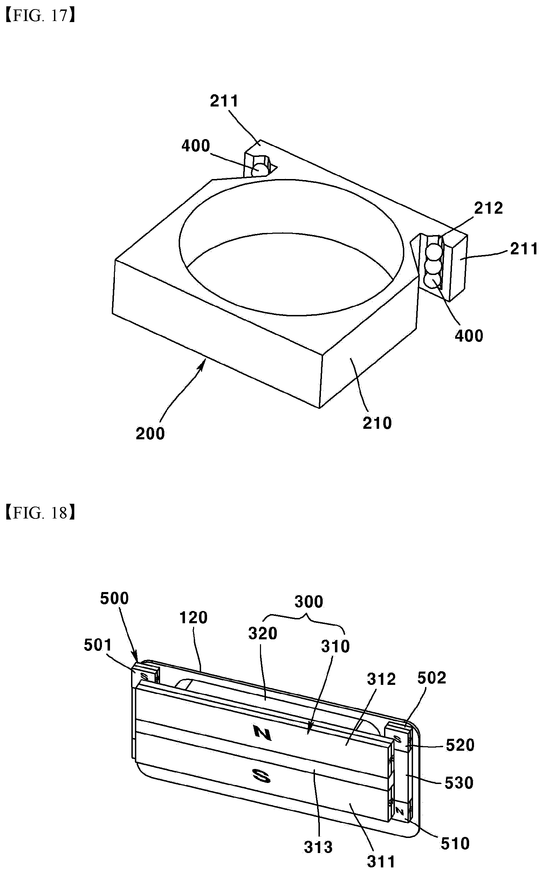

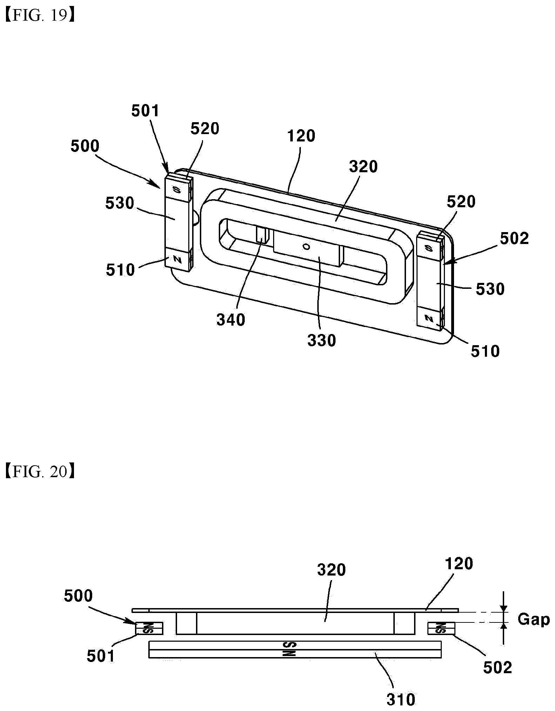

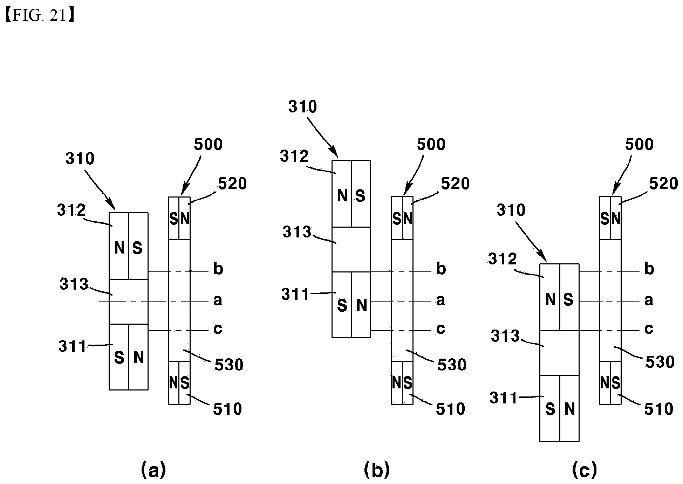

FIG. 1 is a perspective view of the lens driving device according to a first embodiment of the present invention, FIG. 2 is a cross-sectional view of FIG. 1 from A-A, FIG. 3 is a cross-sectional perspective view of the lens driving device according to the first embodiment of the present invention, FIG. 4 is a cross-sectional view of FIG. 1 from B-B, FIGS. 5 and 6 are cross-sectional views of the lens driving device according to the first embodiment of the present invention, FIG. 7 is a cross-sectional view of the lens driving device according to the first embodiment of the present invention, cut perpendicular to the optical axis, FIG. 8 is an exploded perspective view of the lens driving device according to the first embodiment of the present invention, FIG. 9 is an exploded perspective view of the lens driving device in a different direction from that of FIG. 8, FIG. 10 is a perspective view of the lens driving device according to the first embodiment of the present invention with the cover removed, FIG. 11 is a top view of the lens driving device according to the first embodiment of the present invention with the cover removed, FIG. 12 is a bottom perspective view of the lens driving device according to the first embodiment of the present invention with the cover removed, FIG. 13 is a partial perspective view of the lens driving device according to the first embodiment of the present invention with the cover removed, FIG. 14 is a perspective view showing the fixed unit of the lens driving device and related configuration according to the first embodiment of the present invention, FIG. 15 is a partial enlarged view of FIG. 14 from a different direction, FIG. 16 is a perspective view showing the moving unit of the lens driving device and related configuration according to the first embodiment of the present invention, FIG. 17 is a perspective view from a different direction than that of FIG. 16, FIG. 18 is a perspective view showing the magnet and coil of the lens driving device and related configuration according to the first embodiment of the present invention, FIG. 19 is a perspective view of FIG. 18 with the driving magnet omitted, FIG. 20 is a top view of FIG. 18, FIG. 21 is a drawing showing a driving magnet and a repulsion magnet of the lens driving device according to the first embodiment of the present invention. (a) is a drawing showing the driving magnet and the repulsion magnet when the driving magnet is in its initial state, i.e. before moving. (b) is a drawing showing the driving magnet and the repulsion magnet when the driving magnet is maximally moved upward in the optical axis direction. (c) is a drawing showing the driving magnet and the repulsion magnet when the driving magnet is maximally moved downward in the optical axis direction, and FIG. 22 is a conceptual diagram showing the pressing of the ball by the repulsive force between the driving magnet and the repulsion magnet in the first embodiment of the present invention.

A lens driving device (10) may be a voice coil motor (VCM). The lens driving device (10) may be a lens driving motor. The lens driving device (10) may be a lens driving actuator. The lens driving device unit (10) may comprise an AF module. The lens driving device (10) may comprise an AF actuator.

The lens driving device (10) may comprise a fixed unit (100). The fixed unit (100) may be a relatively fixed portion when a moving unit (200) moves. The moving unit (200) may move relative to the fixed unit (100).

The lens driving device (10) may comprise a base (110). The fixed unit (100) may comprise a base (110). The base (110) may be disposed below a holder (210). The base (110) may be coupled with a cover (130). The holder (210) may be disposed on the base (110). The holder (210) may be disposed on a lower plate (111) of the base (110). The holder (210) may be disposed within the base (110). The holder (210) may be disposed within a side plate (112) of the base (110).

The base (110) may comprise a lower plate (111). The lower plate (111) of the base (110) may support a lower surface of the moving unit (200). The lower plate (111) of the base (110) may support the lower surface of the holder (210). The lower plate (111) of the base (110) can function as a lower stopper of the moving unit (200). The lower plate (111) of the base (110) can function as a lower stopper of the holder (210).

The base (110) may comprise a side plate (112). The side plate (112) may be a 'side unit'. The side plate (112) may be a 'sidewall'. The side plate (112) of the base (110) may extend from the upper surface of the lower plate (111). The side plate (112) may comprise a plurality of side plates. The side plate (112) may comprise four side plates. The side plate (112) may comprise a first side plate and a second side plate disposed on opposite sides of each other, and a third side plate and a fourth side plate disposed on opposite sides of each other.

The base (110) may comprise a column unit (113). The column unit (113) may extend from the upper surface of the lower plate (111). The column unit (113) may extend inward from the side plate (112). A ball (400) may be disposed in the column unit (113). A groove (114) in which the ball (400) is disposed can be formed in the column unit (113). The column unit (113) may be referred to as a 'protrusion'.

The fixed unit (100) may comprise a first sidewall in which a coil (320) is disposed, a second sidewall disposed opposite the first sidewall, and a protrusion disposed between the first sidewall and the second sidewall in a first direction in which the first sidewall faces the second sidewall. At this time, the protrusion may be a column unit (113). In the first direction, the moving unit (200) may comprise a protrusion that is disposed between the first sidewall of the fixed unit (100) and the protrusion. The ball (400) may be disposed between the protrusion of the moving unit (200) and the protrusion of the fixed unit (100).

The base (110) may comprise a groove (114). The column unit (113) may comprise a groove (114). The groove (114) may be formed in the column unit (113). The groove (114) may be a 'ball receiving groove.' A ball (400) may be disposed in the groove (114). The groove (114) may be in direct contact with the ball (400). The groove (114) may be oriented in the optical axis direction. The groove (114) may comprise multiple grooves. The groove (114) may comprise two grooves. The two grooves may be disposed parallel to each other.

The base (110) may comprise a groove (115). The groove (115) may be a 'repulsion magnet receiving groove.' A repulsion magnet (500) may be disposed in the groove (115). The groove (115) may comprise a shape corresponding to the repulsion magnet (500). A groove (115) may be formed on the inner surface of the side plate (112) of the base (110). The groove (115) may comprise a plurality of grooves. The groove (115) may comprise two grooves.

The base (110) may comprise a staircase (116). A staircase (116) may be formed at the lower end of the outer side of the base (110). The staircase (116) may protrude from the outer side of the base (110). The side plate (132) of the cover (130) may be disposed on the staircase (116) of the base (110).

The base (110) may comprise a protrusion (117). The protrusion (117) may be a substrate-coupling protrusion. The protrusion (117) may be inserted into a hole in a substrate (120). The protrusion (117) may be coupled to the substrate (120). The protrusion (117) can fix the substrate (120). The protrusion (117) may be formed on the side plate (112). The protrusion (117) may be formed protruding on the outer side of the base (110). The protrusion (117) may comprise multiple protrusions. The protrusion (117) may comprise two protrusions.

One of the 'grooves (114)' and 'grooves (115)' of the base (110) may be called the 'first groove' and the other may be called the 'second groove.'

The lens driving device (10) may comprise a substrate (120). The fixed unit (100) may comprise a substrate (120). The substrate (120) may be disposed in the fixed unit (100). The substrate (120) may be disposed on the base (110). The substrate (120) may be disposed on the side plate (112) of the base (110). The substrate (120) may be disposed on the cover (130). The substrate (120) may be disposed on the side plate (132) of the cover (130). The substrate (120) may be disposed on the inner surface of the side plate (132) of the cover (130). The substrate (120) may be disposed on the outer surface of the side plate (132) of the cover (130). The substrate (120) may be disposed parallel to the optical axis. A substrate (120) may have a coil (320) and a sensor (330) disposed thereon. The substrate (120) may comprise a printed circuit board. The substrate (120) may comprise a flexible printed circuit board (FPCB).

The substrate (120) may comprise a terminal (121). The terminal (121) may be formed at the lower end of the outer surface of the substrate (120). The terminal (121) of the substrate (120) may be coupled with the printed circuit board (50) of the camera device (10A). The terminal (121) of the substrate (120) can be electrically connected to the printed circuit board (50) of the camera device (10A). The terminal (121) of the substrate (120) may be soldered to the printed circuit board (50) of the camera device (10A). The terminal (121) may comprise a plurality of terminals. The terminal (121) may comprise five terminals. The terminal (121) may comprise a terminal electrically connected to a sensor (330). The terminal (121) may comprise a ground terminal for grounding. The terminal (121) may comprise a terminal electrically connected to the coil (320).

The lens driving device (10) may comprise a cover (130). The fixed unit (100) may comprise a cover (130). The cover (130) may be disposed on the base (110). The cover (130) may be disposed on the base (110). The cover (130) may be coupled to the base (110). The cover (130) may be fixed to the base (110). The cover (130) can accommodate a holder (210) thereinside. The cover (130) may be a shield member. The cover (130) may be a shield can.

The cover (130) may comprise an upper plate (131). The upper plate (131) of the cover (130) may function as an upper stopper of the moving unit (200). The upper plate (131) of the cover (130) may function as an upper stopper of the holder (210). The upper plate (131) may be disposed on the moving unit (200). The upward movement of the moving unit (200) may be limited by the moving unit (200) coming into contact with the upper plate (131). The upper plate (131) may comprise holes through which light passes.

The cover (130) may comprise a side plate (132). The side plate (132) may extend from the upper plate (131). The side plate (132) may be disposed on the base (110). The side plate (132) may be disposed in the staircase (116) that protrudes from the lower end of the outer side of the base (110). The side plate (132) may comprise multiple side plates. The side plate (132) may comprise four side plates. The side plate (132) may comprise a first side plate and a second side plate disposed on opposite sides of each other, and a third side plate and a fourth side plate disposed on opposite sides of each other.

The lens driving device (10) may comprise a moving unit (200). The moving unit (200) may be disposed in a fixed unit (100). The moving unit (200) may be disposed within the fixed unit (100). The moving unit (200) may be disposed on the fixed unit (100). The moving unit (200) may be disposed movably on the fixed unit (100). The moving unit (200) can be moved with respect to the fixed unit (100) by the driving unit (300). The moving unit (200) can be moved in the optical axis direction with respect to the fixed unit (100) by the driving unit (300). The moving unit (200) can be moved in the optical axis direction. The moving unit (200) can be moved when the AF is operated. A lens may be coupled to the moving unit (200).

The lens driving device (10) may comprise a holder (210). The moving unit (200) may comprise a holder (210). The holder (210) may be an 'AF holder'. The holder (210) may be a 'bobbin'. The holder (210) may be a 'carrier'. The holder (210) may be disposed within the base (110). The holder (210) may be disposed on the base (110). The holder (210) may be disposed within the cover (130). The holder (210) may be disposed movably. The holder (210) may be disposed movably in the optical axis direction.

The holder (210) may comprise a first portion (211). The first portion (211) may be disposed between the side plate (112) and the column unit (113) of the base (110). A ball (400) may be disposed in the first portion (211) of the holder (210). The first portion (211) of the holder (210) may be formed with a groove (212) in which a ball (400) is disposed.

The holder (210) may comprise a groove (212). The groove (212) may be a 'ball receiving groove.' A ball (400) may be disposed in the groove (212). The groove (212) can be in direct contact with the ball (400). The groove (212) may be disposed in the optical axis direction. The groove (212) can guide the ball (400) to move in the optical axis direction. The groove (212) may comprise multiple grooves. The groove (212) may comprise two grooves. The two grooves may be disposed in parallel with each other. The groove (212) of the holder (210) may be disposed opposite the groove (114) of the base (110). The ball (400) may be disposed between the groove (212) of the holder (210) and the groove (114) of the base (110).

The holder (210) may comprise a groove (213). The groove (213) may be a 'driving magnet receiving groove.' The groove (213) may be formed on the outer side of the holder (210). The groove (213) may be formed concave on the side of the holder (210). A driving magnet (310) may be disposed in the groove (213). The groove (213) may be formed in a shape corresponding to the driving magnet (310). The groove (213) may be recessed to a depth equal to the thickness of the driving magnet (310).

One of the 'groove (212)' and 'groove (213)' of the holder (210) may be called 'first groove' and the other 'second groove.'

The lens driving device (10) may comprise a driving unit (300). The driving unit (300) may move the moving unit (200) in the optical axis direction. The driving unit (300) may move the holder (210) in the optical axis direction. The driving unit (300) can move the holder (210) in the optical axis direction through electromagnetic force. The driving unit (300) may comprise a driving magnet (310) and a coil (320). The driving magnet (310) and the coil (320) can move the moving unit (200) in the optical axis direction.

The lens driving device (10) may comprise a driving magnet (310). The driving unit (300) may comprise a driving magnet (310). The driving magnet (310) may be disposed on the moving unit (200). The driving magnet (310) may be disposed on the holder (210). The driving magnet (310) can be fixed to the holder (210). The driving magnet (310) can be coupled to the holder (210). The driving magnet (310) can be coupled to the holder (210) with an adhesive. The driving magnet (310) may be disposed within the cover (130). The drive magnet (310) may be disposed between the coil (320) and the holder (210). The drive magnet (310) may be disposed on the inside of the coil (320). The drive magnet (310) can overlap the coil (320) in a direction perpendicular to the optical axis. The driving magnet (310) may face the coil (320). The driving magnet (310) may face the coil (320). The driving magnet (310) may be disposed in a position corresponding to the coil (320). The driving magnet (310) can interact with the coil (320). The driving magnet (310) can interact with the coil (320) electromagnetically. The driving magnet (310) can be moved. The driving magnet (310) may be disposed so that it can be moved. The driving magnet (310) can be moved when the AF is driven. The driving magnet (310) can be moved together with the holder (210). The driving magnet (310) can be moved in the optical axis direction. When current is applied to the coil (320), the driving magnet (310) can be moved in the optical axis direction.

The driving magnet (310) may be a four-pole magnet. The driving magnet (310) may comprise a four-pole magnetic magnet. The driving magnet (310) may comprise a lower magnet unit (311) comprising an N pole and an S pole. The driving magnet (310) may comprise an upper magnet unit (312) comprising an S-pole and an N-pole. The driving magnet (310) may comprise a neutral unit (313) disposed between the lower magnet unit (311) and the upper magnet unit (312).

The upper magnet unit (312) may be disposed on the lower magnet unit (311). The lower magnet unit (311) and the upper magnet unit (312) may be disposed in the optical axis direction. The lower magnet unit (311) and the upper magnet unit (312) may be spaced apart in the optical axis direction. A neutral unit (313) may be disposed between the lower magnet unit (311) and the upper magnet unit (312).

The lens driving device (10) may comprise a coil (320). The driving unit (300) may comprise a coil (320). The coil (320) may be disposed on a substrate (120). The coil (320) may be disposed on the inner surface of the substrate (120). The coil (320) may be disposed on the fixed unit (100). The coil (320) may be disposed on the base (110). The coil (320) may be disposed on the cover (130). The coil (320) may be disposed on the outside of the driving magnet (310). The coil (320) may be disposed between the side plate (132) of the cover (130) and the driving magnet (310). The coil (320) can be fixed. The coil (320) may remain fixed even when the AF is driven. The coil (320) can interact with the driving magnet (310). The coil (320) may face the driving magnet (310). The coil (320) may face the driving magnet (310). The coil (320) may be disposed in a position corresponding to the driving magnet (310). The coil (320) can overlap the driving magnet (310) in a direction perpendicular to the optical axis. The coil (320) can overlap the driving magnet (310) in the x-axis direction perpendicular to the optical axis.

The lens driving device (10) may comprise a sensor (330). The driving unit (300) may comprise a sensor (330). The sensor (330) may detect a driving magnet (310). The sensor (330) may be disposed on a substrate (120). The sensor (330) may be disposed within the coil (320). The sensor (330) may be a Hall sensor. The amount of movement or position of the driving magnet (310) detected by the sensor (330) can be used for feedback in the autofocus driving.

In an alternative embodiment, the sensor (330) may be a driver IC. The driver IC may comprise a Hall element that detects the driving magnet (310). The driver IC may comprise a sensing unit. The sensing unit may comprise a Hall IC. The driver IC may be electrically connected to the coil (320). The driver IC can apply a current to the coil (320).

The lens driving device (10) may comprise a capacitor (340). The driving unit (300) may comprise a capacitor (340). The capacitor (340) may be disposed on the substrate (120). The capacitor (340) may be disposed within the coil (320). The capacitor (340) may be disposed next to the sensor (330). The capacitor (340) can be used to remove noise detected by the sensor (330).

The lens driving device (10) may comprise a guide member. The guide member may comprise a ball (400). The guide member may comprise a shaft. The guide member may comprise a pin. The guide member may comprise a cylindrical member. The guide member may guide the movement of the moving unit (200) in a specific direction relative to the fixed unit (100). **In** a variant example, the ball (400) of the first embodiment of the present invention may be redisposed with a shaft. **In** this case, the tilting phenomenon of the moving unit (200) may be prevented.

The lens driving device (10) may comprise a ball (400). The ball (400) may guide movement of the moving unit (200) relative to the fixed unit (100) in the optical axis direction. The ball (400) may guide movement of the holder (210) relative to the base (110) in the optical axis direction. The ball (400) may be disposed between the fixed unit (100) and the moving unit (200). The ball (400) may be disposed between the base (110) and the holder (210). The ball (400) may be disposed between the base (110) and the holder (210) in the x-direction. Alternatively, the ball (400) may be disposed in the y-direction between the base (110) and the holder (210). The ball (400) may be disposed in the groove (114) of the base (110). The ball (400) may be disposed in the groove (212) of the holder (210). The ball (400) may be spherical. The ball (400) may be formed of metal. Grease may be applied to the surface of the ball (400).

The distance between the ball (400) and the optical axis may be shorter than the distance between the repulsion magnet (500) and the optical axis. The distance between the ball (400) and the optical axis may be the same as the distance between the sensor (330) and the optical axis. As a variant example, the distance between the ball (400) and the optical axis may be the same as the distance between the coil (320) and the optical axis. The ball (400) may be disposed being spaced apart from the side plate (120) of the base (110). When viewed from above, the side plate (120) of the base (110), the first portion (211) of the holder (210), the ball (400), the column unit (113) of the base (110), the holder (210), and the side plate (120) of the base (110) may be disposed in order on a virtual straight line.

The ball (400) may comprise multiple balls. The ball (400) may comprise multiple unit balls. The ball (400) may be provided with a total of six balls, three in one set and two sets. The ball (400) may comprise a first ball (410) and a second ball (420). The first ball (410) may be disposed on a virtual straight line connecting a first corner of the optical axis and the base (110). The second ball (410) may be disposed on a virtual straight line connecting a second corner of the optical axis and the base (110). The first and second corners of the base (110) may be disposed adjacent to each other. The first ball (410) may be disposed on one side of the driving magnet (310). The second ball (420) may be disposed on the other side of the driving magnet (310).

When seen from above, the distance between the first ball (410) and the second ball (420) may be larger than the width of the driving magnet (310).

The lens driving device (10) may comprise a repulsion (repulsive) magnet (500). The repulsion magnet (500) may be disposed in the fixed unit (100). The repulsion magnet (500) may be fixed to the fixed unit (100). The repulsion magnet (500) may be coupled to the fixed unit (100). The repulsion magnet (500) may be coupled to the fixed unit (100) with adhesive. The repulsion magnet (500) may be disposed on the base (110). The repulsion magnet (500) may be fixed to the base (110). The repulsion magnet (500) may be coupled to the base (110). The repulsion magnet (500) may be coupled to the base (110) with adhesive.

The repulsion magnet (500) can press the driving magnet (310) in the direction of the ball (400). The repulsion magnet (500) can press the moving unit (200) in the direction of the ball (400). The repulsion magnet (500) can press the holder (210) in the direction of the ball (400). The repulsion magnet (500) can engage the ball (400) between the fixed unit (100) and the moving unit (200) through interaction with the driving magnet (310). A repulsive force (repulsion) can be generated between the repulsion magnet (500) and the driving magnet (310). The repulsion magnet (500) may be disposed to generate the repulsive force with the driving magnet (310). The repulsion magnet (500) can push away the driving magnet (310). The repulsion magnet (500) can be formed so that the ball (400) is engaged between the fixed unit (100) and the moving unit (200). The repulsion magnet (500) can pressurize the driving magnet (310) so that the ball (400) is pressed between the fixed unit (100) and the moving unit (200).

The repulsion magnet (500) may be spaced apart from the substrate (120). A gap (see the gap in FIG. 20) may be formed between the repulsion magnet (500) and the substrate (120). As a variant example, the repulsion magnet (500) may be disposed on the substrate (120).

The repulsion magnet (500) may overlap the driving magnet (310) in the x-axis direction. A portion of the repulsion magnet (500) may overlap the driving magnet (310) in the x-axis direction. At least a portion of the repulsion magnet (500) may overlap the driving magnet (310) in the x-axis direction. The driving magnet (310) may comprise a first portion that overlaps with the driving magnet (310) in the x-axis direction, and a second portion that does not overlap with the driving magnet (310) in the x-axis direction. The second portion may protrude outward more than the first portion. The second portion may protrude above and below the first portion. As a variant example, the repulsion magnet (500) can be completely overlapped with the driving magnet (310) in the x-axis direction. **In** other words, the entire inner surface of the repulsion magnet (500) can be completely overlapped with the driving magnet (310) in the x-axis direction.

The repulsion magnet (500) can overlap the coil (320) in the y-axis direction, which is perpendicular to both the optical axis direction and the x-axis direction. The coil (320) may comprise a first portion that overlaps with the repulsion magnet (500) in the y-axis direction, and a second portion that does not overlap. The coil (320) may be disposed between two repulsion magnets (500) in the y-axis direction. The coil (320) may be disposed between a first unit magnet (501) and a second unit magnet (502) in the y-axis direction. The repulsion magnet (500) may overlap the sensor (330) in the y-axis direction. The sensor (330) may be disposed between two repulsion magnets (500) in the y-axis direction. The sensor (330) may be disposed between the first unit magnet (501) and the second unit magnet (502) in the y-axis direction.

The repulsion magnet (500) may comprise multiple magnets. The repulsion magnet (500) may comprise two magnets. The repulsion magnet (500) may comprise two magnets spaced apart from each other. The repulsion magnet (500) may comprise a first unit magnet (501). The repulsion magnet (500) may comprise a second unit magnet (502). The first unit magnet (501) may be disposed on one side of the coil (320). The second unit magnet (502) may be disposed on the other side of the coil (320).

The repulsion magnet (500) may be a four-pole magnet. The repulsion magnet (500) may comprise a four-pole magnetic magnet. The repulsion magnet (500) may comprise a lower magnet unit (510) comprising an N pole and an S pole. The repulsion magnet (500) may comprise an upper magnet unit (520) comprising an S pole and an N pole. The repulsion magnet (500) may comprise a neutral unit (530) that is disposed between the lower magnet unit (510) and the upper magnet unit (520). In the optical axis direction, the length of the neutral unit (530) may be longer than the length of the lower magnet unit (510). In the direction of the optical axis, the length of the neutral unit (530) may be longer than the length of the upper magnet unit (520). In the direction of the optical axis, the length of the neutral unit (530) may be longer than the sum of the lengths of the lower magnet unit (510) and the upper magnet unit (520). In the optical axis direction, the length of the neutral unit (530) may be equal to the sum of the lengths of the lower magnet unit (510) and the upper magnet unit (520). In the optical axis direction, the length of the neutral unit (530) may be less than the sum of the lengths of the lower magnet unit (510) and the upper magnet unit (520).

The upper magnet unit (520) may be disposed on the lower magnet unit (510). The lower magnet unit (510) and the upper magnet unit (520) may be disposed in the optical axis direction. The lower magnet unit (510) and the upper magnet unit (520) can be spaced apart in the optical axis direction. A neutral unit (530) may be disposed between the lower magnet unit (510) and the upper magnet unit (520).

The N pole of the lower magnet unit (510) of the driving magnet (310) may face the N pole of the lower magnet unit (311) of the driving magnet (500). The S pole of the upper magnet unit (520) of the repulsion magnet (500) may face the S pole of the upper magnet unit (312) of the driving magnet (310). In other words, the repulsion magnet (500) and the driving magnet (310) may be disposed so that the same poles face each other.

In the optical axis direction, the length of the neutral unit (530) of the repulsion magnet (500) may be longer than the length of the neutral unit (313) of the driving magnet (310) (see (a) in FIG. 21). In the optical axis direction, the length of the repulsion magnet (500) may be longer than the length of the driving magnet (310). In the direction of the optical axis, the length of the lower magnet unit (510) of the repulsion magnet (500) may be shorter than the length of the lower magnet unit (311) of the driving magnet (310). In the direction of the optical axis, the length of the upper magnet unit (520) of the repulsion magnet (500) may be shorter than the length of the upper magnet unit (312) of the driving magnet (310).

When the driving magnet (310) moves to the lower side of the optical axis as far as possible, the first boundary between the lower magnet unit (311) of the driving magnet (310) and the neutral unit (313) of the driving magnet (310) is 3/4 of the way up from the neutral unit (530) of the repulsion magnet (500), In other words, it can be positioned at the same height as the 75% point {c in FIG. 21(c)} {See (c) in FIG. 21}.

When the driving magnet (310) moves as far as possible to the lower side of the optical axis, the first boundary between the lower magnet unit (311) of the driving magnet (310) and the neutral unit (313) of the driving magnet (310) is equal to or lower in height than the first boundary between the lower magnet unit (510) of the repulsion magnet (500) and the neutral unit (530) of the repulsion magnet (500).

When the driving magnet (310) moves to the lower side of the optical axis as far as possible, the first boundary between the lower magnet unit (510) of the repulsion magnet (500) and the neutral unit (530) of the repulsion magnet (500) is disposed at the same height as the first boundary between the lower magnet unit (311) of the driving magnet (310) and the neutral unit (313) of the driving magnet (310).

When the driving magnet (310) moves to the lower side of the optical axis as far as possible, the first boundary between the lower magnet unit (510) of the repulsion magnet (500) and the neutral unit (530) of the repulsion magnet (500) is positioned at a lower height than the first boundary between the lower magnet unit (311) of the driving magnet (310) and the neutral unit (313) of the driving magnet (310).

When the driving magnet (310) moves to the upper side of the optical axis as far as possible, the second boundary between the upper magnet unit (312) of the driving magnet (310) and the neutral unit (313) of the driving magnet (310) is one-quarter of the way up the neutral unit (530) of the repulsion magnet (500), **In** other words, it can be disposed at the same height as the 25% point (b) in FIG. 21(b) (see FIG. 21(b)).

When the driving magnet (310) moves as far as possible to the upper side of the optical axis, the second boundary between the upper magnet unit (312) of the driving magnet (310) and the neutral unit (313) of the driving magnet (310) is equal to or higher than the second boundary between the upper magnet unit (520) of the repulsion magnet (500) and the neutral unit (530) of the repulsion magnet (500).

When the driving magnet (310) moves as far as possible to the upper side of the optical axis, the second boundary between the upper magnet unit (520) of the repulsion magnet (500) and the neutral unit (530) of the repulsion magnet (500) is disposed at the same height as the second boundary between the upper magnet unit (312) of the driving magnet (310) and the neutral unit (313) of the driving magnet (310).

When the driving magnet (310) moves to the upper side of the optical axis as far as possible, the second boundary between the upper magnet unit (520) of the repulsion magnet (500) and the neutral unit (530) of the repulsion magnet (500) is positioned at a higher height than the second boundary between the upper magnet unit (312) of the driving magnet (310) and the neutral unit (313) of the driving magnet (310).

In the first embodiment of the present invention, the phenomenon in which the polarities of the driving magnet (310) and the repulsion magnet (500) are disposed opposite to each other can be prevented even when the driving magnet (310) moves through the structure mentioned above.

The following describes the autofocus (AF) operation of the lens driving device according to the first embodiment of the present invention, referring to the drawings.

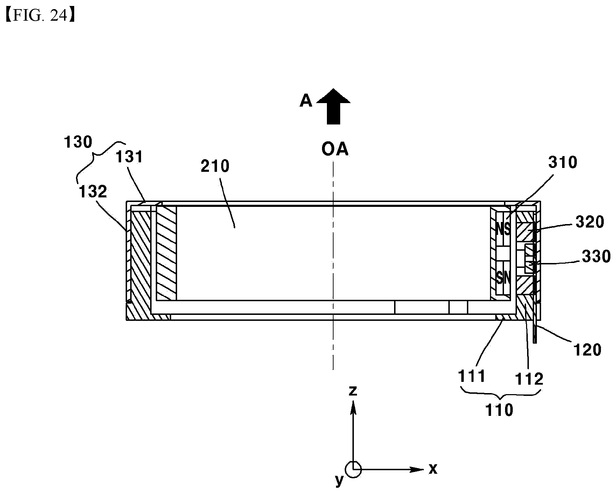

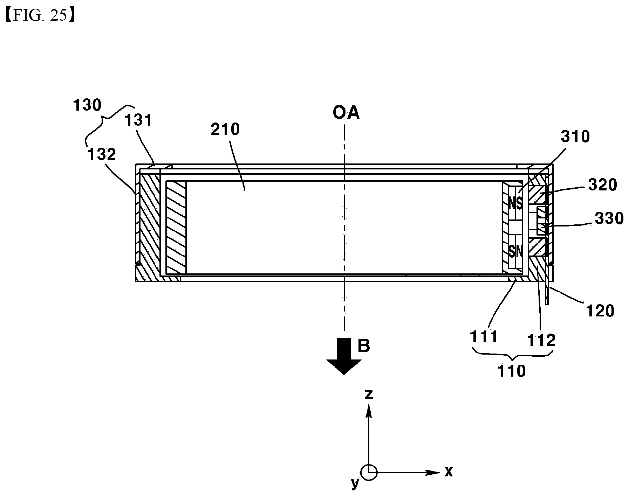

FIGS. 23 to 25 are drawings for explaining the autofocus operation of the lens driving device according to the first embodiment of the present invention. FIG. 23 shows a cross-sectional view of the moving unit in the initial state when no current is applied to the coil. FIG. 24 shows a cross-sectional view of the moving unit moving upward in the optical axis direction when a forward current is applied to the coil. FIG. 25 shows a cross-sectional view of the moving unit moving downward in the optical axis direction when a reverse current is applied to the coil.

As shown in FIG. 23, the moving unit (200) may be disposed at a position separated from both the upper plate (131) of the cover (130) and the base (110) in the initial position when no current is applied to the coil (320).

When a forward current is applied to the coil (320), the driving magnet (310) can move upward in the optical axis direction due to the electromagnetic interaction between the coil (320) and the driving magnet (310) (see A in FIG. 24). At this time, the holder (210) can move upward in the optical axis direction along with the driving magnet (310). Furthermore, the lens can move upward in the optical axis direction along with the holder (210). Accordingly, the distance between the lens and the image sensor can be changed, and the focus of the image projected onto the image sensor through the lens can be adjusted.

When a reverse current is applied to the coil (320), the driving magnet (310) can move downwards in the optical axis direction due to the electromagnetic interaction between the coil (320) and the driving magnet (310) (see B in FIG. 25). At this time, the holder (210) can be moved to the lower side of the optical axis along with the driving magnet (310). Furthermore, the lens can be moved to the lower side of the optical axis along with the holder (210). Accordingly, the distance between the lens and the image sensor can be changed, and the focus of the image projected onto the image sensor through the lens can be adjusted.

Meanwhile, during the movement of the driving magnet (310), the sensor (330) can detect the strength of the magnetic field of the driving magnet (310) and detect the amount of movement or position of the lens in the optical axis direction. The amount of movement or position of the lens in the optical axis direction detected by the sensor (330) can be used for autofocus feedback control.

The camera device according to the first embodiment of the present invention is described with reference to the drawings.

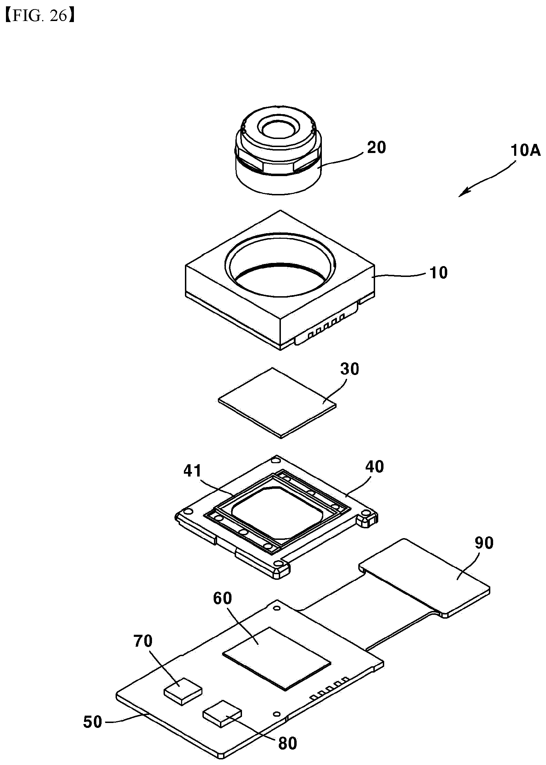

FIG. 26 is an exploded perspective view of the camera device according to the first embodiment of the present invention.

The camera device (10A) may comprise a camera module.

The camera device (10A) may comprise a lens module (20). The lens module (20) may comprise at least one lens. The lens may be disposed in a corresponding position with the image sensor (60). The lens module (20) may comprise a lens and a barrel. The lens module (20) can be coupled to the holder (210) of the lens driving device (10). The lens module (20) can be screwed and/or coupled to the holder (210). The lens module (20) can move as a whole with the holder (210).

The camera device (10A) may comprise a filter (30). The filter (30) may serve to block the incidence of light in a specific frequency band into the image sensor (60) from light passing through the lens module (20). The filter (30) may be disposed parallel to the x-y plane. The filter (30) may be disposed between the lens module (20) and the image sensor (60). The filter (30) may be disposed on the sensor base (40). In a variant example, the filter (30) may be disposed on the base (110). The filter (30) may comprise an infrared filter. The infrared filter may block the incidence of light in the infrared region on the image sensor (60).

The camera device (10A) may comprise a sensor base (40). The sensor base (40) may be disposed between the lens driving device (10) and the printed circuit board (50). The sensor base (40) may comprise a protrusion (41) on which a filter (30) is disposed. An opening may be formed in the portion of the sensor base (40) in which the filter (30) is disposed to allow light passing through the filter (30) to enter the image sensor (60). An adhesive member may bond or couple the base (110) of the lens driving device (10) to the sensor base (40). The adhesive member can additionally serve to prevent foreign matter from entering the interior of the lens driving device (10). The adhesive member may comprise one or more of epoxy, thermosetting adhesive, and ultraviolet curing adhesive.

In a variant example, the sensor base (40) may be omitted. In this case, the filter (30) may be coupled to the base (110) of the lens driving device (10). The filter (30) may be coupled to the lower surface of the base (110) of the lens driving device (10). In addition, in a variant example, the sensor holder (40) can be shaped to protect only the image sensor (60). In other words, the base (110) of the lens driving device (10) may be disposed directly on the printed circuit board (50). In this case, the sensor holder (40) may be disposed within the base (110). The base (110) may be formed to enclose the sensor holder (40). The base (110) may comprise a leg unit, which is an outer wall that is seated on the printed circuit board (50).

The camera device (10A) may comprise a printed circuit board (PCB) (50). The printed circuit board (50) may be a substrate or a circuit board. The printed circuit board (50) may be disposed with the lens driving device (10). A sensor base (40) may be disposed between the printed circuit board (50) and the lens driving device (10). The printed circuit board (50) may be electrically connected to the lens driving device (10). An image sensor (60) may be disposed on the printed circuit board (50). The printed circuit board (50) may be equipped with various circuits, elements, and control units to convert the image captured by the image sensor (60) into an electrical signal and transmit it to an external device.

The camera device (10A) may comprise an image sensor (60). The image sensor (60) may be configured to receive light incident through a lens and a filter (30) to form an image. The image sensor (60) may be mounted on a printed circuit board (50). The image sensor (60) can be electrically connected to the printed circuit board (50). For example, the image sensor (60) may be coupled to the printed circuit board (50) by surface mounting technology (SMT). As another example, the image sensor (60) may be coupled to the printed circuit board (50) by flip chip technology. The image sensor (60) may be disposed so that the lens and the optical axis are aligned. In other words, the optical axis of the image sensor (60) and the optical axis of the lens can be aligned. The image sensor (60) can convert the light irradiated on the effective image area of the image sensor (60) into an electrical signal. The image sensor (60) may be any one of a CCD (charge coupled device), MOS (metal oxide semiconductor), CPD, and CID.

The camera device (10A) may comprise a motion sensor (70). The motion sensor (70) may be mounted on a printed circuit board (50). The motion sensor (70) may be electrically connected to the control unit (80) via a circuit pattern provided on the printed circuit board (50). The motion sensor (70) can output angular velocity information of rotation caused by movement of the camera device (10A). The motion sensor (70) may comprise a two-axis or three-axis gyro sensor, or an angular velocity sensor.

The camera device (10A) may comprise a control unit (80). The control unit (80) may be disposed on the printed circuit board (50). The control unit (80) can be electrically connected to the coil (310) of the lens driving device (10). The control unit (80) can individually control the direction, strength, and amplitude of the current supplied to the coil (310). The control unit (80) can control the lens driving device (10) to perform the autofocus function and/or the image stabilization function. Furthermore, the control unit (80) can perform autofocus feedback control and/or image stabilization feedback control for the lens driving device (10).

The camera device (10A) may comprise a connector (90). The connector (90) may be electrically connected to the printed circuit board (50). The connector (90) may comprise a port for electrically connecting to an external device.

The following describes an optical device according to the first embodiment of the present invention, with reference to the drawings.

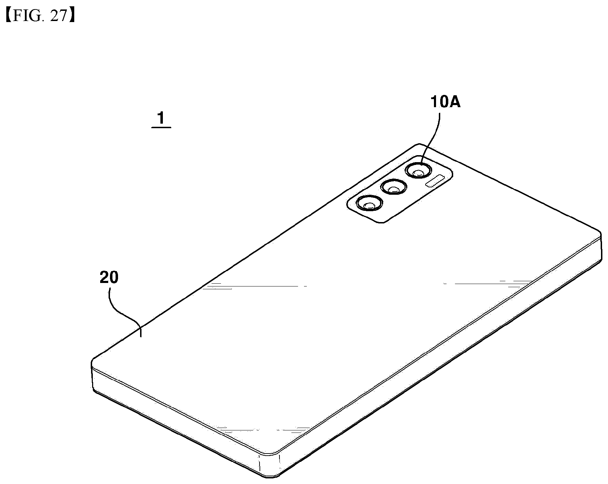

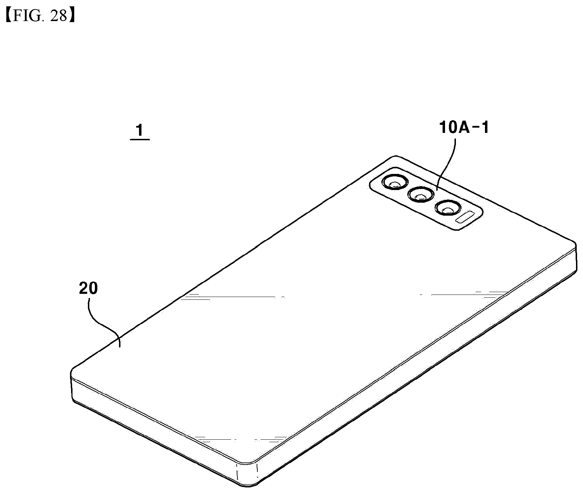

FIG. 27 is a perspective view of an optical device according to the first embodiment of the present invention. FIG. 28 is a perspective view of an optical device according to a variant example.

An optical device (1) may comprise one or more of a mobile phone, cellular phone, portable terminal, mobile terminal, smart phone, smart pad, portable smart device, digital camera, laptop computer, digital broadcasting terminal, personal digital assistant (PDA), portable multimedia player (PMP), and navigation device. The optical device (1) may comprise any device for taking images or photographs.

The optical device (1) may comprise a main body (20). The optical device (1) may comprise a camera device (10A). The camera device (10A) may be disposed in the main body (20). The camera device (10A) may photograph a subject. The optical device (1) may comprise a display. The display may be disposed on the main body (20). The display can output one or more of the images and videos captured by the camera device (10A). The display may be disposed on the first surface of the main body (20). The camera device (10A) may be disposed on one or more of the first surface of the main body (20) and the second surface of the main body opposite to the first surface. As shown in FIG. 27, the camera device (10A) may be disposed with a triple camera in a vertical direction. As shown in FIG. 28, the camera device (10A-1) may be disposed with the triple camera in a horizontal direction.

The following describes the configuration of the lens driving device according to a second embodiment of the present invention, referring to the drawings.

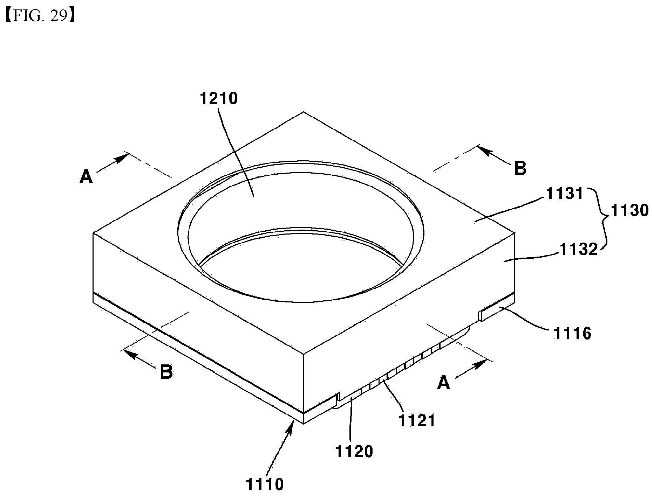

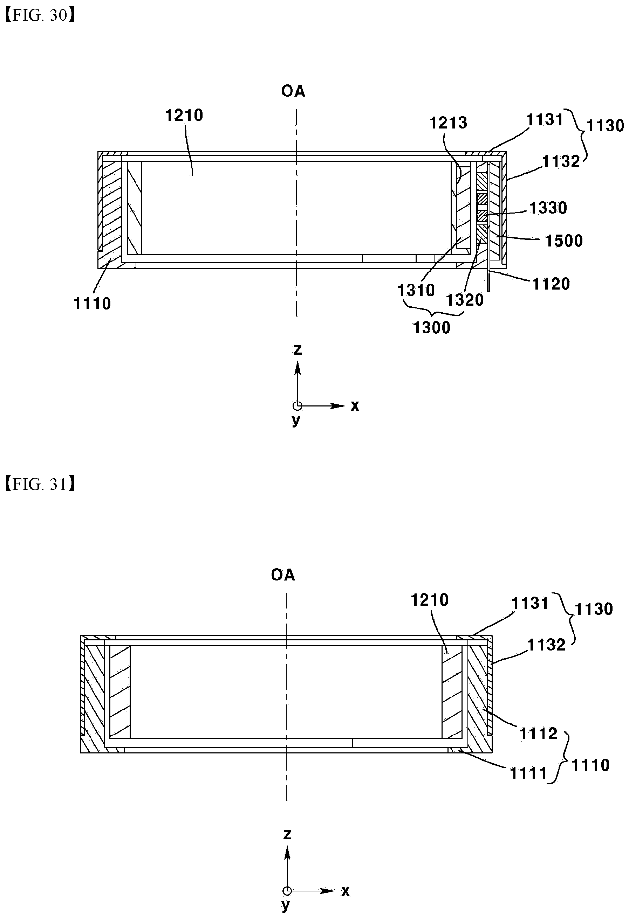

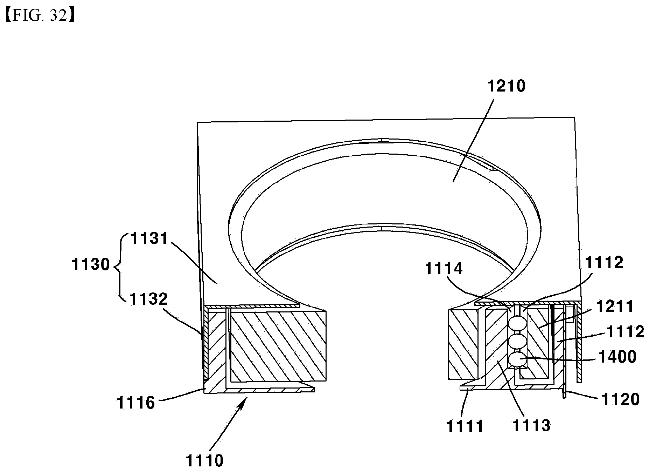

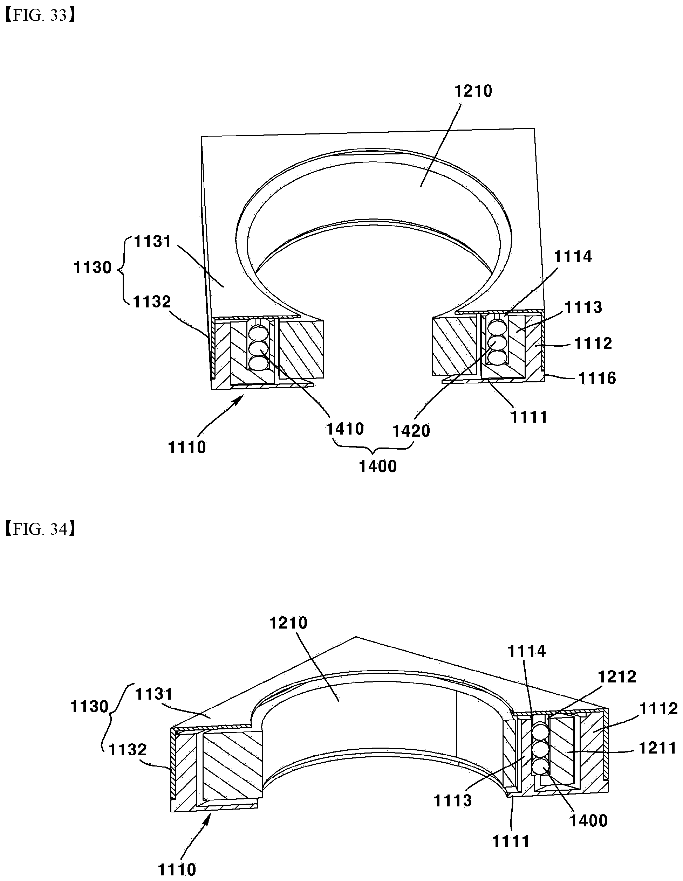

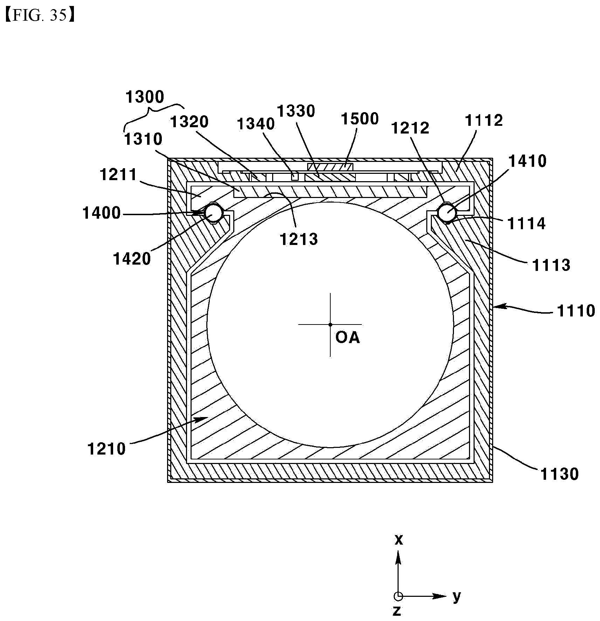

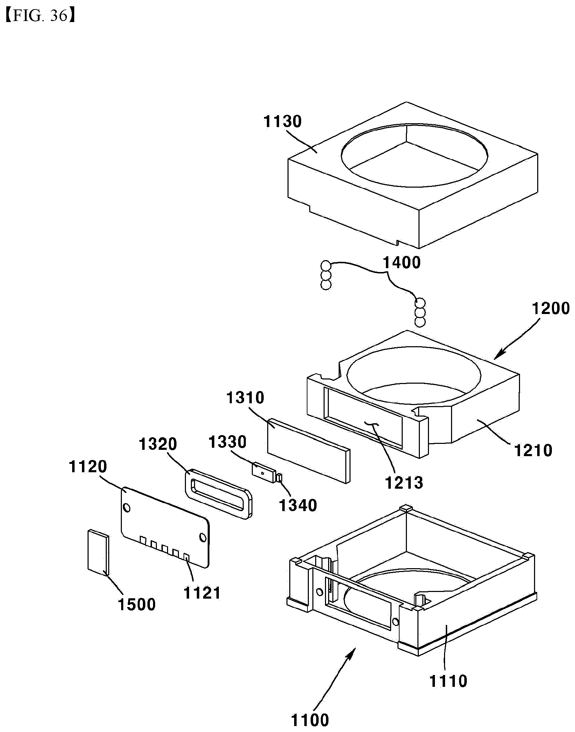

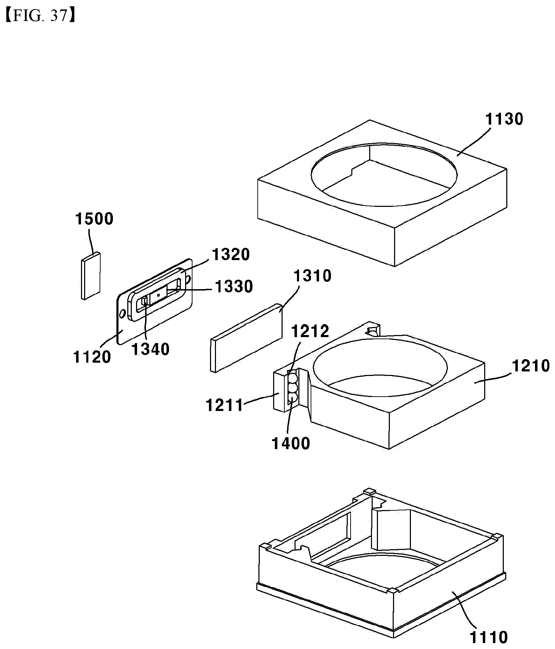

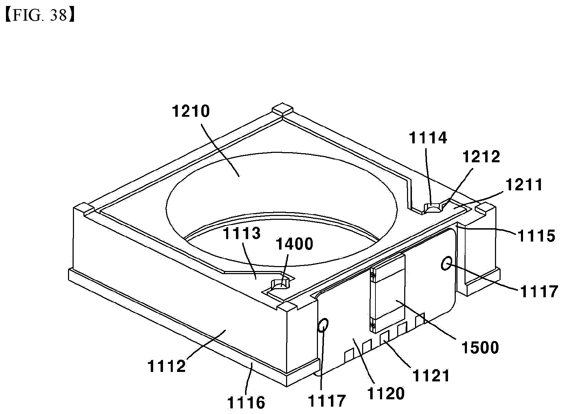

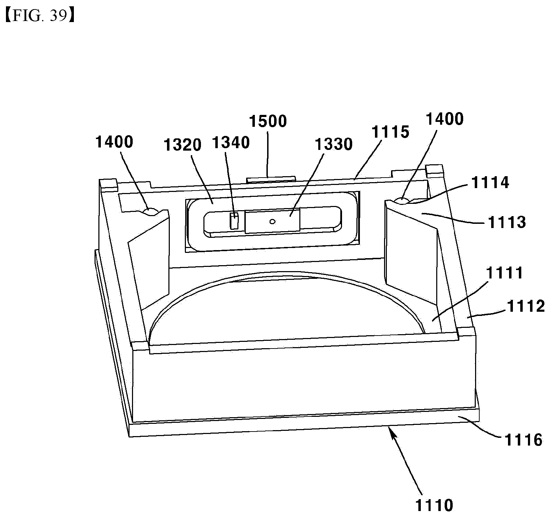

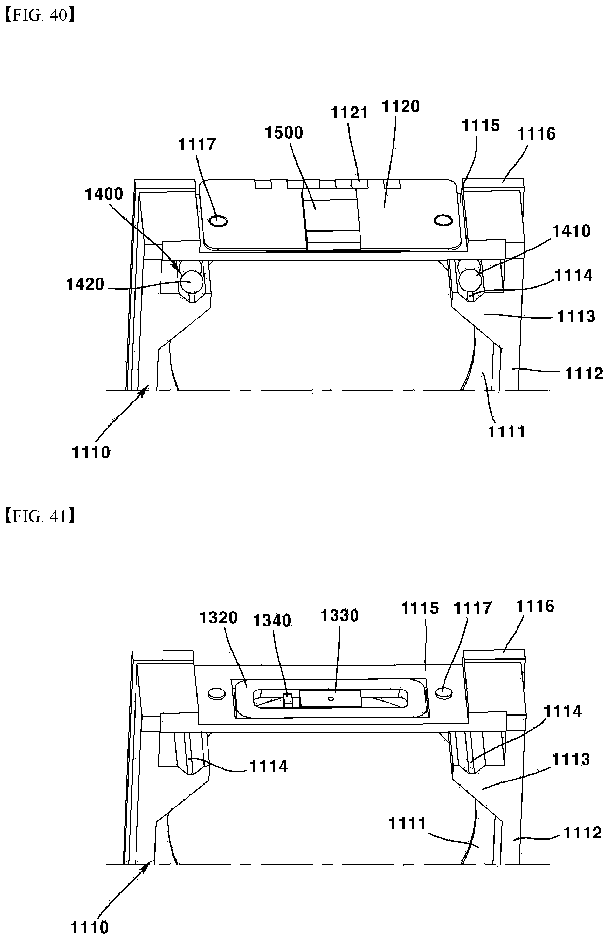

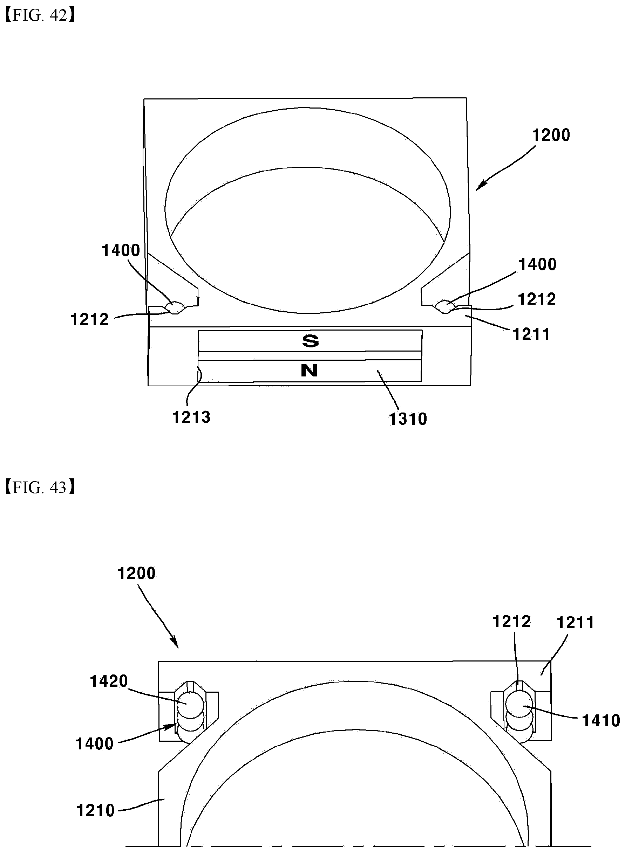

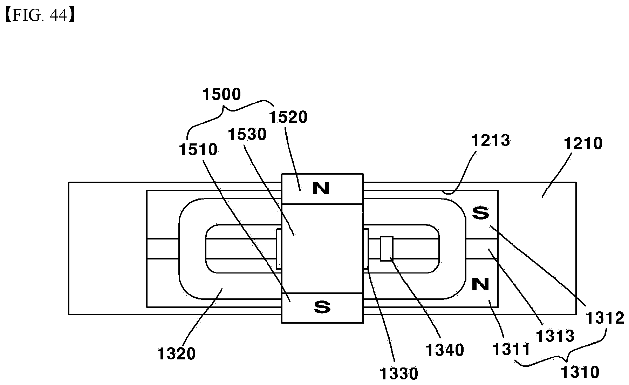

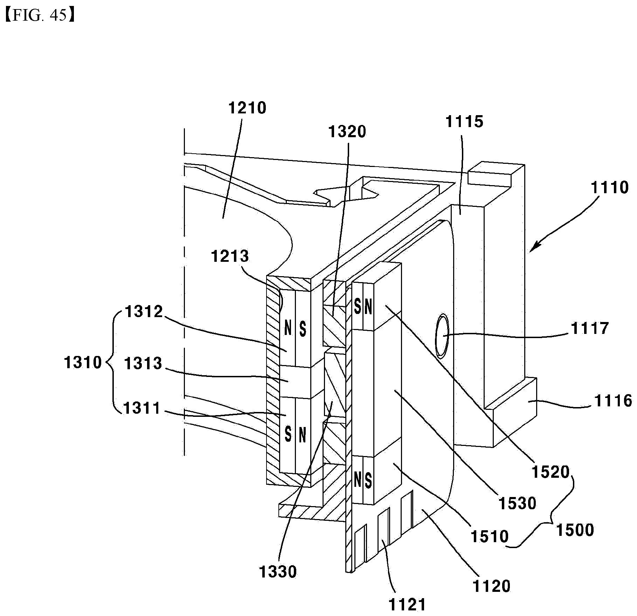

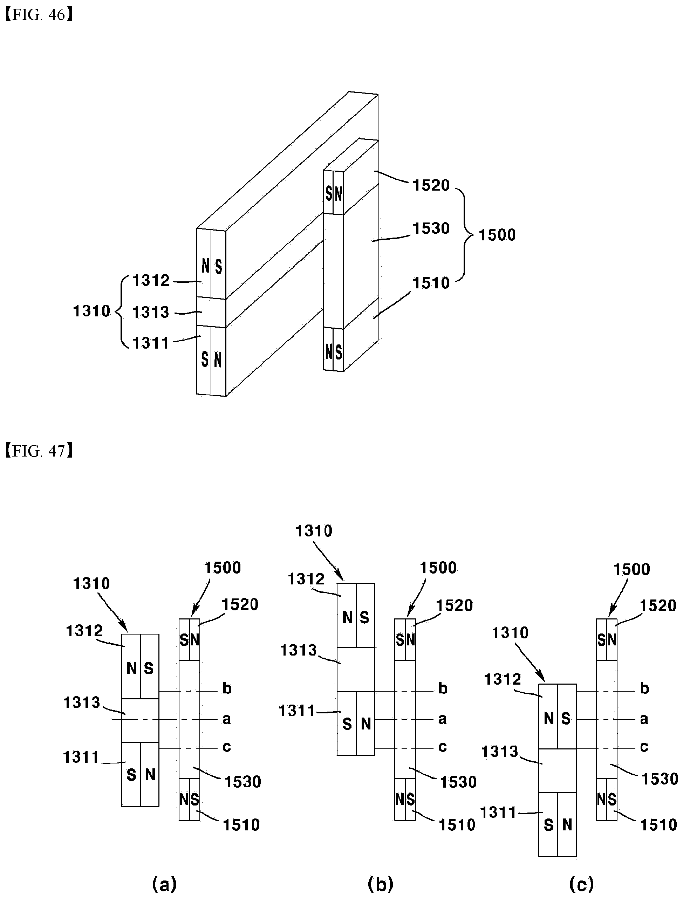

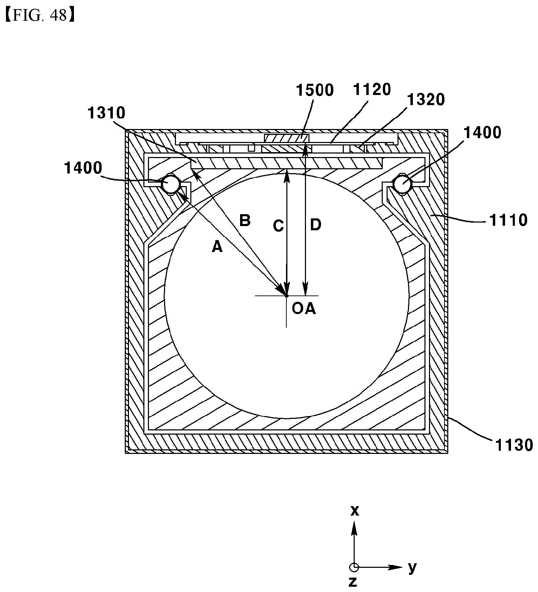

FIG. 29 is a perspective view of the lens driving device according to a second embodiment of the present invention. FIG. 30 is a cross-sectional view taken from A-A in FIG. 29. FIG. 31 is a cross-sectional view taken from B-B in FIG. 29. FIGS. 32 to 34 are cross-sectional views of the lens driving device according to a second embodiment of the present invention, cut at different parts and viewed from different angles. FIG. 35 is a cross-sectional view of a lens driving device according to a second embodiment of the present invention, cut perpendicular to the optical axis and viewed from above. FIG. 36 is an exploded perspective view of a lens driving device according to a second embodiment of the present invention. FIG. 37 is an exploded perspective view of the lens driving device in a different direction from that of FIG. 36. FIG. 38 is a perspective view of the lens driving device according to a second embodiment of the present invention with the cover omitted. FIG. 39 is a perspective view of the lens driving device according to a second embodiment of the present invention with the moving unit and related configuration omitted. FIG. 40 is a perspective view of FIG. 39 from a different angle. FIG. 41 is a perspective view of FIG. 40 with the ball, substrate, and repulsion magnet omitted. FIG. 42 is a perspective view showing the moving unit of the lens driving device and related configuration according to a second embodiment of the present invention. FIG. 43 is a perspective view of FIG. 42 from a different angle. FIG. 44 is a front view of the moving unit, the driving unit, and the repulsion magnet of the lens driving device according to a second embodiment of the present invention. FIG. 45 is a cross-sectional view showing the driving magnet and the repulsion magnet of a lens driving device according to a second embodiment of the present invention and their related configurations. FIG. 46 is a perspective view of the driving magnet and the repulsion magnet of a lens driving device according to a second embodiment of the present invention. FIG. 47 is a drawing showing the driving magnet and the repulsion magnet of the lens driving device according to a second embodiment of the present invention. (a) is a drawing showing the driving magnet and the repulsion magnet when the driving magnet is in its initial state, i.e. before moving. (b) is a drawing showing the driving magnet and the repulsion magnet when the driving magnet is maximally moved upward in the optical axis direction. (c) is a drawing showing the driving magnet and the repulsion magnet when the driving magnet is maximally moved downward in the optical axis direction. FIG. 48 is a cross-sectional view for comparing the distance between the optical axis and each component in a lens driving device according to a second embodiment of the present invention.

The lens driving device (1010) may be a voice coil motor (VCM). The lens driving device (1010) may be a lens driving motor. The lens driving device (1010) may be a lens driving actuator. The lens driving device (1010) may comprise an AF module. The lens driving device (1010) may comprise an AF actuator.

The lens driving device (1010) may comprise a fixed unit (1100). The fixed unit (1100) may be a relatively fixed portion when a moving unit (1200) is moved. The moving unit (1200) can move relative to the fixed unit (1100).

The lens driving device (1010) may comprise a base (1110). The fixed unit (1100) may comprise a base (1110). The base (1110) may be disposed below a holder (1210). The base (1110) may be coupled with a cover (1130). The holder (1210) may be disposed on the base (1110). The holder (1210) may be disposed on a lower plate (1111) of the base (1110). The holder (1210) may be disposed within the base (1110). The holder (1210) may be disposed within a side plate (1112) of the base (1110).

The base (1110) may comprise a lower plate (1111). The lower plate (1111) of the base (1110) may support the lower surface of the moving unit (1200). The lower plate (1111) of the base (1110) may support the lower surface of the holder (1210). The lower plate (1111) of the base (1110) can function as a lower stopper of the moving unit (1200). The lower plate (1111) of the base (1110) can function as a lower stopper of the holder (1210).

The base (1110) may comprise a side plate (1112). The side plate (1112) may be a side unit'. The side plate (1112) may be a 'side wall'. The side plate (1112) of the base (1110) may extend from the upper surface of the lower plate (1111). The side plate (1112) may comprise a plurality of side plates. The side plate (1112) may comprise four side plates. The side plate (1112) may comprise a first to fourth side plate. The side plate (1112) may comprise a first side plate and a second side plate disposed on opposite sides of each other, and a third side plate and a fourth side plate disposed on opposite sides of each other.

The base (1110) may comprise a column (pillar) unit (1113). The column unit (1113) may extend from the upper surface of the lower plate (1111). The column unit (1113) may extend inward from the side plate (1112). A ball (1400) may be disposed in the column unit (1113). A groove (1114) may be formed in the column unit (1113) in which a ball (1400) is disposed. The column unit (1113) may be referred to as a 'protrusion'.

The fixed unit (1100) may comprise a first sidewall in which a coil (1320) is disposed, a second sidewall disposed opposite to the first sidewall, and a protrusion that is disposed between the first sidewall and the second sidewall in the first direction in which the first sidewall faces the second sidewall. In this case, the protrusion may be a column (1113). In the first direction, the moving unit (1200) may comprise a protrusion that is disposed between the first side wall of the fixed unit (1100) and the protrusion. The ball (1400) may be disposed between the protrusion of the moving unit (1200) and the protrusion of the fixed unit (1100).

The base (1110) may comprise a groove (1114). The column unit (1113) may comprise a groove (1114). The groove (1114) may be formed in the column unit (1113). The groove (1114) may be a 'ball receiving groove.' A groove (1114) may be disposed in the groove (1114). The groove (1114) may be directly contacted with the ball (1400). The groove (1114) may be disposed in the optical axis direction. The groove (1114) may comprise multiple grooves. A groove (1114) may comprise two grooves. The two grooves may be disposed in parallel with each other.

The base (1110) may comprise a groove (1115). The groove (1115) may be a 'substrate and a repulsion magnet receiving groove.' The substrate (1120) may be disposed in the groove (1115). The repulsion magnet (1500) may be disposed in the groove (1115). The groove (1115) may comprise a shape corresponding to the substrate (1120). The groove (1115) may be formed on the outer surface of the side plate (1112) of the base (1110). The depth of the groove (1115) may be greater than the thickness of the repulsion magnet (1500).

The base (1110) may comprise a staircase (1116). The staircase (1116) may be formed at the lower end of the outer surface of the base (1110). The staircase (1116) may protrude from the outer surface of the base (1110). A side plate (1132) of the cover (1130) may be disposed in the staircase (1116) of the base (1110).

The base (1110) may comprise a protrusion (1117). The protrusion (1117) may be a 'substrate-coupling protrusion'. The protrusion (1117) may be inserted into a hole of the substrate (1120). The protrusion (1117) may be coupled to the substrate (1120). The protrusion (1117) can fix the substrate (1120). The protrusion (1117) may be formed on the side plate (1112). A protrusion (1117) may be formed on the outer side of the base (1110). The protrusion (1117) may comprise a plurality of protrusions. The protrusion (1117) may comprise two protrusions.

One of the 'Home (1114)' and 'Home (1115)' of the base (1110) may be called 'first groove' and the other 'second groove.'

The lens driving device (1010) may comprise a substrate (1120). The fixed unit (1100) may comprise a substrate (1120). The substrate (1120) may be disposed in the fixed unit (1100). The substrate (1120) may be disposed in the base (1110). The substrate (1120) may be disposed on the side plate (1112) of the base (1110). The substrate (1120) may be disposed on the outer surface of the side plate (1112) of the base (1110). The substrate (1120) may be disposed on the cover (1130). The substrate (1120) may be disposed on the side plate (1132) of the cover (1130). The substrate (1120) may be disposed on the inner surface of the side plate (1132) of the cover (1130). The substrate (1120) may be disposed on the outer surface of the side plate (1132) of the cover (1130). The substrate (1120) may be disposed parallel to the optical axis. The substrate (1120) may have a coil (1320) and a sensor (1330) disposed thereon. The substrate (1120) may have a repulsion magnet (1500) disposed thereon. The substrate (1120) may comprise a printed circuit board. The substrate (1120) may comprise a flexible printed circuit board (FPCB).

The substrate (1120) may comprise a terminal (1121). The terminal (1121) may be formed at the lower end of the outer surface of the substrate (1120). The terminal (1121) of the substrate (1120) may be coupled to the printed circuit board (1050) of the camera device (1010A). The terminal (1121) of the substrate (1120) can be electrically connected to the printed circuit board (1050) of the camera device (1010A). The terminal (1121) of the substrate (1120) may be soldered to the printed circuit board (1050) of the camera device (1010A). The terminal (1121) may comprise a plurality of terminals. The terminal (1121) may comprise five terminals. The terminal (1121) may comprise a terminal electrically connected to the sensor (1330). The terminal (1121) may comprise a ground terminal for grounding. The terminal (1121) may comprise a terminal electrically connected to the coil (1320). At least a portion of the terminal (1121) may be exposed to the outside.

The lens driving device (1010) may comprise a cover (1130). The fixed unit (1100) may comprise a cover (1130). The cover (1130) may be disposed on the base (1110). The cover (1130) may be disposed on the base (1110). The cover (1130) may be coupled to the base (1110). The cover (1130) may be fixed to the base (1110). The cover (1130) can accommodate the holder (1210) thereinside. The cover (1130) may be a shield member. The cover (1130) can be a shield can.

The cover (1130) may comprise an upper plate (1131). The upper plate (1131) of the cover (1130) may function as an upper stopper of the moving part (1200). The upper plate (1131) of the cover (1130) may function as an upper stopper of the holder (1210). The upper plate (1131) may be disposed on the moving unit (1200). The upward movement of the moving unit (1200) can be restricted by the moving unit (1200) coming into contact with the upper plate (1131). The upper plate (1131) may comprise holes through which light passes.

The cover (1130) may comprise a side plate (1132). The side plate (1132) may extend from the upper plate (1131). The side plate (1132) may be disposed on the base (1110). The side plate (1132) may be disposed on the staircase (1116) that protrudes from the lower end of the outer side of the base (1110). The side plate (1132) may comprise multiple side plates. The side plate (1132) may comprise four side plates. The side plate (1132) may comprise a first side plate and a second side plate disposed opposite each other, and a third side plate and a fourth side plate disposed opposite each other.

The lens driving device (1010) may comprise a moving unit (1200). The moving unit (1200) may be disposed in a fixed unit (1100). The moving unit (1200) may be disposed within the fixed unit (1100). The moving unit (1200) may be disposed on the fixed unit (1100). The moving unit (1200) can be movably disposed on the fixed unit (1100). The moving unit (1200) can be moved with respect to the fixed unit (1100) by the driving unit (1300). The moving unit (1200) can be moved in the optical axis direction with respect to the fixed unit (1100) by the driving unit (1300). The moving unit (1200) may be disposed within the fixed unit (1100) so that it can move in the optical axis direction. The moving unit (1200) may move in the optical axis direction. The moving part (1200) may move when the AF is activated. A lens may be coupled to the moving unit (1200).

The lens driving device (1010) may comprise a holder (1210). The moving unit (1200) may comprise a holder (1210). The holder (1210) may be an 'AF holder'. The holder (1210) may be a 'bobbin'. The holder (1210) may be a 'carrier'. The holder (1210) may be disposed within the base (1110). The holder (1210) may be disposed on the base (1110). The holder (1210) may be disposed within the cover (1130). The holder (1210) may be disposed in a movable manner. The holder (1210) may be disposed in a movable manner in the optical axis direction.

The holder (1210) may comprise a first portion (1211). The first portion (1211) may be disposed between the side plate (1112) and the column unit (1113) of the base (1110). A ball (1400) may be disposed in the first portion (1211) of the holder (1210). A groove (1212) may be formed in the first portion (1211) of the holder (1210) in which a ball (1400) is disposed.

The holder (1210) may comprise a groove (1212). The groove (1212) may be a 'ball receiving groove'. A ball (1400) may be disposed in the groove (1212). The groove (1212) may be in direct contact with the ball (1400). The groove (1212) may be oriented in the optical axis direction. The groove (1212) can guide the ball (1400) to move in the optical axis direction. The groove (1212) may comprise a plurality of grooves. The groove (1212) may comprise two grooves. The two grooves may be disposed in parallel with each other. The groove (1212) of the holder (1210) may be disposed facing the groove (1114) of the base (1110). The ball (1400) may be disposed between the groove (1212) of the holder (1210) and the groove (1114) of the base (1110).

The holder (1210) may comprise a groove (1213). The groove (1213) may be a 'driving magnet receiving groove.' The groove (1213) may be formed on the outer side of the holder (1210). The groove (1213) may be formed in a concave manner on the side surface of the holder (1210). A driving magnet (1310) may be disposed in the groove (1213). The groove (1213) may be formed in a shape corresponding to the driving magnet (1310). The groove (1213) may be recessed to a depth equal to the thickness of the driving magnet (1310).

One of the 'groove (1212)' and 'groove (1213)' of the holder (1210) may be called 'first groove' and the other 'second groove.'

The lens driving device (1010) may comprise a driving unit (1300). The driving unit (1300) may move the moving unit (1200) in the optical axis direction. The driving unit (1300) may move the holder (1210) in the optical axis direction. The driving unit (1300) can move the holder (1210) in the optical axis direction through electromagnetic force. The driving unit (1300) may comprise a driving magnet (1310) and a coil (1320). The driving magnet (1310) and coil (1320) can move the moving unit (1200) in the optical axis direction.

The lens driving device (1010) may comprise a driving magnet (1310). The driving unit (1300) may comprise a driving magnet (1310). The driving magnet (1310) may be disposed on the moving unit (1200). The driving magnet (1310) may be disposed on the holder (1210). The driving magnet (1310) may be fixed to the holder (1210). The driving magnet (1310) may be coupled to the holder (1210). The driving magnet (1310) may be coupled to the holder (1210) with adhesive. The driving magnet (1310) may be disposed within the cover (1130). The driving magnet (1310) may be disposed between the coil (1320) and the holder (1210). The driving magnet (1310) may be disposed on the inside of the coil (1320).

The driving magnet (1310) may overlap the coil (1320) in a direction perpendicular to the optical axis. The driving magnet (1310) may be disposed so that it overlaps the coil (1320) in the x-axis direction perpendicular to the optical axis. The driving magnet (1310) may look at the coil (1320) in the x-axis direction perpendicular to the optical axis. The driving magnet (1310) may be disposed to face the coil (1320). The driving magnet (1310) may be disposed so that the coil (1320) is oriented in the x-axis direction perpendicular to the optical axis. The driving magnet (1310) can face the coil (1320). The driving magnet (1310) can face the coil (1320). The driving magnet (1310) may be disposed in a position corresponding to the coil (1320). The driving magnet (1310) can interact with the coil (1320). The driving magnet (1310) can interact with the coil (1320) electromagnetically. The driving magnet (1310) can be moved. The driving magnet (1310) may be disposed so that it can be moved. The driving magnet (1310) can be moved when the AF is operated. The driving magnet (1310) can be moved together with the holder (1210). The driving magnet (1310) can move in the optical axis direction. When a current is applied to the coil (1320), the driving magnet (1310) can move in the optical axis direction.

The driving magnet (1310) may be a four-pole magnet. The driving magnet (1310) may comprise a four-pole magnet. The driving magnet (1310) may comprise a lower magnet unit (1311) comprising an N-pole and an S-pole. The driving magnet (1310) may comprise an upper magnet unit (1312) comprising an S-pole and an N-pole. The driving magnet (1310) may comprise a neutral unit (1313) disposed between the lower magnet unit (1311) and the upper magnet unit (1312).

The upper magnet unit (1312) may be disposed on the lower magnet unit (1311). The lower magnet unit (1311) and the upper magnet unit (1312) may be disposed in the optical axis direction. The lower magnet unit (1311) and the upper magnet unit (1312) may be spaced apart in the optical axis direction. A neutral unit (1313) may be disposed between the lower magnet unit (1311) and the upper magnet unit (1312).

The lens driving device (1010) may comprise a coil (1320). The driving unit (1300) may comprise a coil (1320). The coil (1320) may be disposed on a substrate (1120). The coil (1320) may be disposed on the inner surface of the substrate (1120). The coil (1320) may be disposed in the fixed unit (1100). The coil (1320) may be disposed in the base (1110). The coil (1320) may be disposed in the cover (1130). The coil (1320) may be disposed on the outside of the driving magnet (1310). The coil (1320) may be disposed between the side plate (1132) of the cover (1130) and the driving magnet (1310). The coil (1320) can be fixed. The coil (1320) can remain fixed even when the AF is in operation. The coil (1320) can interact with the driving magnet (1310). The coil (1320) may face the driving magnet (1310). The coil (1320) may be disposed opposite the driving magnet (1310). The coil (1320) can overlap the driving magnet (1310) in a direction perpendicular to the optical axis. The coil (1320) may be overlapped with the driving magnet (1310) in the x-axis direction perpendicular to the optical axis direction.

The lens driving device (1010) may comprise a sensor (1330). The driving unit (1300) may comprise a sensor (1330). The sensor (1330) may detect a driving magnet (1310). The sensor (1330) may be disposed on a substrate (1120). The sensor (1330) may be disposed within the coil (1320). The sensor (1330) may be a Hall sensor. The amount of movement or position of the driving magnet (1310) detected by the sensor (1330) may be used for feedback of the autofocus driving.

In a variant example, the sensor (1330) may be a driver IC. The driver IC may comprise a Hall element that detects the driving magnet (1310). The driver IC may comprise a sensing unit. The sensing unit may comprise a Hall IC. The driver IC may be electrically connected to the coil (1320). The driver IC can apply a current to the coil (1320).

The lens driving device (1010) may comprise a capacitor (1340). The driving unit (1300) may comprise a capacitor (1340). The capacitor (1340) may be disposed on the substrate (1120). The capacitor (1340) may be disposed within the coil (1320). The capacitor (1340) may be disposed next to the sensor (1330). The capacitor (1340) can be used to remove noise detected by the sensor (1330).

The lens driving device (1010) may comprise a guide member. The guide member may comprise a ball (1400). The guide member may comprise a shaft. The guide member may comprise a pin. The guide member may comprise a cylindrical member. The guide member can guide the movement of the moving unit (1200) relative to the fixed unit (1100) in a specific direction. In a variant example, the ball (1400) of the second embodiment of the present invention can be redisposed with a shaft. In this case, the tilting phenomenon of the moving unit (1200) can be prevented.

The lens driving device (1010) may comprise a ball (1400). The ball (1400) may guide the movement of the moving unit (1200) relative to the fixed unit (1100) in the optical axis direction. The ball (1400) can guide the movement of the base (1110) of the holder (1210) in the optical axis direction. The ball (1400) may be disposed between the fixed unit (1100) and the moving unit (1200). The ball (1400) may be disposed between the base (1110) and the holder (1210). The ball (1400) may be disposed between the base (1110) and the holder (1210) in the x-direction. Alternatively, the ball (1400) may be disposed between the base (1110) and the holder (1210) in the y-direction. The ball (1400) may be disposed in the groove (1114) of the base (1110). The ball (1400) may be disposed in the groove (1212) of the holder (1210). The ball (1400) may be spherical. The ball (1400) may be formed of metal. The ball (1400) may be non-magnetic. A grease can be applied to the surface of the ball (1400).

As shown in FIG. 48, the distance (see A in FIG. 48) between the ball (1400) and the optical axis (OA) may be equal to the distance (see D in FIG. 48) between the repulsion magnet (1500) and the optical axis (OA). In a variant example, the distance between the ball (1400) and the optical axis (OA) (see A in FIG. 48) may be shorter than the distance between the repulsion magnet (1500) and the optical axis (OA) (see D in FIG. 48). In another variant example, the distance between the ball (1400) and the optical axis (OA) (see A in FIG. 48) may be longer than the distance between the repulsion magnet (1500) and the optical axis (OA) (see D in FIG. 48). The distance between the ball (1400) and the optical axis (OA) may be the shortest distance. The distance between the ball (1400) and the optical axis (OA) may be the distance in the direction perpendicular to the optical axis (OA). The distance between the repulsion magnet (1500) and the optical axis (OA) may be the shortest distance. The distance between the repulsion magnet (1500) and the optical axis (OA) may be the distance in the direction perpendicular to the optical axis (OA).

As shown in FIG. 48, the distance (see A in FIG. 48) between the ball (1400) and the optical axis (OA) may be shorter than the distance (see B in FIG. 48) between the end of the driving magnet (1310) and the optical axis (OA). In addition, as shown in FIG. 48, the distance between the ball (1400) and the optical axis (OA) (see A in FIG. 48) may be longer than the distance between the center of the driving magnet (1310) and the optical axis (see C in FIG. 48).

The ball (1400) may be spaced apart from the optical axis at a first distance. At least a portion of the driving magnet (1310) may be spaced apart from the optical axis greater than the first distance. The driving magnet (1310) may comprise a first region that is spaced apart from the optical axis greater than the first distance. The driving magnet (1310) may comprise a second region spaced apart from the optical axis less than the first distance. The driving magnet (1310) may comprise a third region spaced apart from the optical axis by the first distance. At this time, the first region may be the end region of the driving magnet (1310), the second region may be the central region of the driving magnet (1310), and the third region may be the region between the first and second regions of the driving magnet (1310). As a variant example, the distance between the ball (1400) and the optical axis may be smaller than the shortest distance between the driving magnet (1310) and the optical axis. In other words, the ball (1400) may be disposed closer to the optical axis than the driving magnet (1310).

When viewed from above, the side plate (1112) of the base (1110), the first portion (1211) of the holder (1210), the ball (1400), the column unit (1113) of the base (1110), The side plates (1112) of the holder (1210) and base (1110) may be disposed in order.

The ball (1400) may comprise multiple balls. The ball (1400) may comprise multiple unit balls. The ball (1400) may be provided with a total of six balls, three in one set and two sets. The ball (1400) may comprise the first ball (1410) and the second ball (1420). The first ball (1410) may be disposed on a virtual straight line connecting the first corner of the optical axis and the base (1110). The second ball (1420) may be disposed on a virtual straight line connecting the second corner of the optical axis and the base (1110). The first and second corners of the base (1110) may be disposed adjacent to each other. The first ball (1410) may be disposed on one side of the driving magnet (1310). The second ball (1420) may be disposed on the other side of the driving magnet (1310).

When seen from above, the distance between the first ball (1410) and the second ball (1420) may be larger than the width of the driving magnet (1310).

The lens driving device (1010) may comprise a repulsion magnet (1500). The repulsion magnet (1500) may be disposed in a fixed unit (1100). The repulsion magnet (1500) may be fixed to the fixed unit (1100). The repulsion magnet (1500) may be coupled to the fixed unit (1100). The repulsion magnet (1500) may be bonded to the fixed unit (1100) with adhesive. The repulsion magnet (1500) may be disposed on the base (1110). The repulsion magnet (1500) may be fixed to the base (1110). The repulsion magnet (1500) may be coupled to the base (1110). The repulsion magnet (1500) may be coupled to the base (1110) with adhesive. The repulsion magnet (1500) may be disposed on a substrate (1120). The repulsion magnet (1500) may be fixed on a substrate (1120). The repulsion magnet (1500) may be coupled to a substrate (1120). The repulsion magnet (1500) may be bonded to the substrate (1120) with an adhesive. The repulsion magnet (1500) may be disposed on the outer surface of the substrate (1120). The repulsion magnet (1500) may be disposed in the cover (1130). The repulsion magnet (1500) may be fixed to the cover (1130). The repulsion magnet (1500) may be coupled to the cover (1130). The repulsion magnet (1500) may be bonded to the cover (1130) with adhesive. The repulsion magnet (1500) may be disposed in the staircase of the base (1110). The repulsion magnet (1500) may be disposed in a recessed groove formed on the side surface of the base (1110).

The repulsion magnet (1500) can press the driving magnet (1310) in the direction of the ball (1400). The repulsion magnet (1500) can press the moving unit (1200) in the direction of the ball (1400). The repulsion magnet (1500) can press the holder (1210) in the direction of the ball (1400). The repulsion magnet (1500) can press the ball (1400) between the fixed unit (1100) and the moving unit (1200) through interaction with the driving magnet (1310). The repulsion magnet (1500) can bring the ball (1400) into close contact between the fixed unit (1100) and the moving unit (1200) through interaction with the driving magnet (1310). The repulsion magnet (1500) can exert an repulsive force on the driving magnet (1310). The repulsive force can be generated between the repulsion magnet (1500) and the driving magnet (1310). The repulsion magnet (1500) may be disposed so that the repulsive force is generated on the driving magnet (1310). The repulsion magnet (1500) can push away the driving magnet (1310). The repulsion magnet (1500) can be formed so that the ball (1400) is disposed between the fixed unit (1100) and the moving unit (1200). The repulsion magnet (1500) can pressurize the driving magnet (1310) so that the ball (1400) is pressed between the fixed unit (1100) and the moving unit (1200).

The coil (1320) may be overlapped with the repulsion magnet (1500) in the x-axis direction. At least a portion of the coil (1320) may be disposed between the driving magnet (1310) and the repulsion magnet (1500) in the x-axis direction. The distance between the upper end and the lower end of the coil (1320) may be 60 to 80% of the distance between the upper end and lower end of the repulsion magnet (1500). The distance between the upper end and lower end of the coil (1320) may be 65 to 75% of the distance between the upper end and lower end of the repulsion magnet (1500).

In the optical axis direction, the length of the repulsion magnet (1500) may be longer than the length of the driving magnet (1310). The upper surface of the repulsion magnet (1500) may be disposed higher than the upper surface of the driving magnet (1310). In the initial position where no current is applied to the coil (1320), the upper surface of the repulsion magnet (1500) may be disposed higher than the upper surface of the driving magnet (1310). The lower surface of the repulsion magnet (1500) may be disposed lower than the lower surface of the driving magnet (1310). In the initial position where no current is applied to the coil (1320), the lower surface of the repulsion magnet (1500) may be disposed lower than the lower surface of the driving magnet (1310).

In the y-axis direction, the length of the repulsion magnet (1500) may be 15 to 40% of the driving magnet (1310). Alternatively, in the y-axis direction, the length of the repulsion magnet (1500) may be 10 to 50% of the driving magnet (1310).

In the x-axis direction, the thickness of the repulsion magnet (1500) may be smaller than the thickness of the driving magnet (1310). In the x-axis direction, the thickness of the repulsion magnet (1500) may be 70 to 90% of the thickness of the driving magnet (1310). In the x-axis direction, the thickness of the repulsion magnet (1500) may be 75 to 85% of the thickness of the driving magnet (1310). Alternatively, in the x-axis direction, the thickness of the repulsion magnet (1500) may be equal to the thickness of the driving magnet (1310). Alternatively, in the x-axis direction, the thickness of the repulsion magnet (1500) may be greater than the thickness of the driving magnet (1310).

In the optical axis direction, the length of the upper magnet unit (1520) of the repulsion magnet (1500) may be 10 to 50% of the length of the neutral unit (1530) of the repulsion magnet (1500). In the optical axis direction, the length of the upper magnet unit (1520) of the repulsion magnet (1500) may be 20 to 40% of the length of the neutral unit (1530) of the repulsion magnet (1500). If the length of the upper magnet unit (1520) is less than the threshold mentioned above, the ball pressing force will be insufficient due to the weak magnetic force, and if it is greater than the threshold mentioned above, there may be a problem in which attraction occurs in some areas when the driving magnet (1310) moves.

When a forward current is applied to the coil (1320) and the moving unit (1200) moves to the upper side of the optical axis to the maximum, the upper end of the neutral unit (1313) of the driving magnet (1310) may be disposed at the same height as the upper end of the neutral unit (1530) of the repulsion magnet (1500). When a reverse current is applied to the coil (1320) and the moving unit (1200) moves to the lower side of the optical axis as far as possible, the lower end of the neutral unit (1313) of the driving magnet (1310) may be disposed at the same height as the lower end of the neutral unit (1530) of the repulsion magnet (1500).

The repulsion magnet (1500) may overlap the driving magnet (1310) in the x-axis direction. A portion of the repulsion magnet (1500) may overlap the driving magnet (1310) in the x-axis direction. At least a portion of the repulsion magnet (1500) may overlap the driving magnet (1310) in the x-axis direction. The repulsion magnet (1500) may comprise a first portion that overlaps with the driving magnet (1310) in the x-axis direction, and a second portion that does not overlap with the driving magnet (1310) in the x-axis direction. The second portion may protrude upward and downward more than the first portion.

The repulsion magnet (1500) may be a four-pole magnet. The repulsion magnet (1500) may comprise a four-pole magnetic magnet. The repulsion magnet (1500) may comprise a lower magnet unit (1510) comprising an N pole and an S pole. The repulsion magnet (1500) may comprise an upper magnet unit (1520) comprising an S-pole and an N-pole. The repulsion magnet (1500) may comprise a neutral unit (1530) disposed between the lower magnet unit (1510) and the upper magnet unit (1520). In the optical axis direction, the length of the neutral unit (1530) may be longer than the length of the lower magnet unit (1510). In the optical axis direction, the length of the neutral unit (1530) may be longer than the length of the upper magnet unit (1520). In the optical axis direction, the length of the neutral unit (1530) may be longer than the sum of the lengths of the lower magnet unit (1510) and the upper magnet unit (1520). In the optical axis direction, the length of the neutral unit (1530) may be equal to the sum of the lengths of the lower magnet unit (1510) and the upper magnet unit (1520). In the optical axis direction, the length of the neutral unit (1530) may be less than the sum of the lengths of the lower magnet unit (1510) and the upper magnet unit (1520).

The upper magnet unit (1520) may be disposed on the lower magnet unit (1510). The lower magnet unit (1510) and the upper magnet unit (1520) may be disposed in the optical axis direction. The lower magnet unit (1510) and the upper magnet unit (1520) may be spaced apart in the optical axis direction. A neutral unit (1530) may be disposed between the lower magnet unit (1510) and the upper magnet unit (1520).

The N-pole of the lower magnet unit (1510) of the driving magnet (1500) may face the N-pole of the lower magnet unit (1311) of the driving magnet (1310). The S-pole of the upper magnet unit (1520) of the driving magnet (1500) may face the S-pole of the upper magnet unit (1312) of the driving magnet (1310). In other words, the repulsion magnet (1500) and the driving magnet (1310) may be disposed with the same poles facing each other.

In the optical axis direction, the length of the lower magnet unit (1510) of the repulsion magnet (1500) may be shorter than the length of the lower magnet unit (1311) of the driving magnet (1310). The length of the lower magnet unit (1510) of the repulsion magnet (1500) may be 60 to 72% of the length of the lower magnet unit (1311) of the driving magnet (1310). The length of the lower magnet unit (1510) of the driving magnet (1500) may be 55 to 77% of the length of the lower magnet unit (1311) of the driving magnet (1310).

In the optical axis direction, the length of the upper magnet unit (1520) of the repulsion magnet (1500) may be shorter than the length of the upper magnet unit (1312) of the driving magnet (1310). The length of the upper magnet unit (1520) of the repulsion magnet (1500) may be 60 to 72% of the length of the upper magnet unit (1312) of the driving magnet (1310). The length of the upper magnet unit (1520) of the repulsion magnet (1500) may be 55 to 77% of the length of the upper magnet unit (1312) of the driving magnet (1310).

In the optical axis direction, the length of the neutral unit (1530) of the repulsion magnet (1500) may be longer than the length of the neutral unit (1313) of the driving magnet (1310) (see (a) in FIG. 47). With this structure, an area in which attraction occurs between the driving magnet (1310) and the repulsion magnet (1500) cannot occur in the entire range of movement of the driving magnet (1310) in the vertical direction. In the optical axis direction, the length of the repulsion magnet (1500) may be longer than the length of the driving magnet (1310). In the optical axis direction, the length of the lower magnet unit (1510) of the repulsion magnet (1500) may be shorter than the length of the lower magnet unit (1311) of the driving magnet (1310). In the optical axis direction, the length of the upper magnet unit (1520) of the repulsion magnet (1500) may be shorter than the length of the upper magnet unit (1312) of the driving magnet (1310).

In the optical axis direction, the length of the neutral unit (1313) of the driving magnet (1310) may be 20 to 30% of the length of the neutral unit (1530) of the repulsion magnet (1500). In the optical axis direction, the length of the neutral unit (1313) of the driving magnet (1310) may be 15 to 35% of the length of the neutral unit (1530) of the repulsion magnet (1500).

When the driving magnet (1310) moves as far as possible to the lower side of the optical axis direction, the first boundary between the lower magnet unit (1311) of the driving magnet (1310) and the neutral unit (1313) of the driving magnet (1310) is three-quarters of the way up from the neutral unit (1530) of the repulsion magnet (1500), In other words, it can be disposed at the same height as the 75% point (see (c) in FIG. 47).

As a variant example, when the driving magnet (1310) moves as far as possible to the lower side of the optical axis direction, The first boundary between the lower magnet unit (1311) of the driving magnet (1310) and the neutral unit (1313) of the driving magnet (1310) is the first boundary between the lower magnet unit (1510) of the repulsion magnet (1500) and the neutral unit (1530) of the repulsion magnet (1500). It can be disposed at the same height as the first boundary.

In another variant example, when the driving magnet (1310) is moved as far as possible to the lower side of the optical axis direction, the first boundary between the lower magnet unit (1311) of the driving magnet (1310) and the neutral unit (1313) of the driving magnet (1310) is the first boundary between the lower magnet unit (1510) of the repulsion magnet (1500) and the neutral unit (1530) of the repulsion magnet (1500). It can be disposed at a lower height than the first boundary.

In another variant example, when the driving magnet (1310) moves as far as possible to the lower side of the optical axis direction, the first boundary between the lower magnet unit (1311) of the driving magnet (1310) and the neutral unit (1313) of the driving magnet (1310) is higher than the first boundary between the lower magnet unit (1510) of the repulsion magnet (1500) and the neutral unit (1530) of the repulsion magnet (1500).

When the driving magnet (1310) moves as far as possible to the upper side of the optical axis, The second boundary between the upper magnet uni (1312) of the driving magnet (1310) and the neutral unit (1313) of the driving magnet (1310) is one-quarter of the way up from the neutral unit (1530) of the repulsion magnet (1500), In other words, it can be positioned at the same height as the 25% point (b) of FIG. 47(b) (see FIG. 47(b)).

As a variant example, when the driving magnet (1310) is moved as far as possible to the upper side of the optical axis direction, the second boundary between the upper magnet unit (1312) of the driving magnet (1310) and the neutral unit (1313) of the driving magnet (1310) is the same as the second boundary between the upper magnet unit (1520) of the repulsion magnet (1500) and the neutral unit (1530) of the repulsion magnet (1500).

In another variant example, when the driving magnet (1310) is moved as far as possible to the upper side of the optical axis direction, the second boundary between the upper magnet unit (1312) of the driving magnet (1310) and the neutral unit (1313) of the driving magnet (1310) is the same in height as the second boundary between the upper magnet unit (1520) of the repulsion magnet (1500) and the neutral unit (1530) of the repulsion magnet (1500).

In another variant example, when the driving magnet (1310) moves as far as possible to the upper side of the optical axis direction, the second boundary between the upper magnet unit (1312) of the driving magnet (1310) and the neutral unit (1313) of the driving magnet (1310) is lower in height than the second boundary between the upper magnet unit (1520) of the repulsion magnet (1500) and the neutral unit (1530) of the repulsion magnet (1500).

In the second embodiment of the present invention, the phenomenon in which the polarities of the driving magnet (1310) and the repulsion magnet (1500) are disposed opposite to each other can be prevented even when the driving magnet (1310) moves through the structure mentioned above.

The following describes the autofocus (AF) operation of the lens driving device according to a second embodiment of the present invention, referring to the drawings.

FIGS. 49 to 51 are drawings for explaining the autofocus driving of a lens driving device according to a second embodiment of the present invention. FIG. 49 is a cross-sectional view showing the state of the moving unit in the initial state when no current is applied to the coil. FIG. 50 is a cross-sectional view showing the state of the moving unit moving upward in the optical axis direction when a forward current is applied to the coil. FIG. 51 is a cross-sectional view showing the state of the moving unit moving downward in the optical axis direction when a reverse current is applied to the coil.

As shown in FIG. 49, the moving unit (1200) may be disposed at a position separated from both the upper plate (1131) of the cover (1130) and the base (1110) in the initial position where no current is applied to the coil (1320).

When a forward current is applied to the coil (1320), the driving magnet (1310) can move upward in the optical axis direction due to the electromagnetic interaction between the coil (1320) and the driving magnet (1310) (see A in FIG. 50). At this time, the holder (1210) can move upward in the optical axis direction along with the driving magnet (1310). Furthermore, the lens can move upward in the optical axis direction along with the holder (1210). Accordingly, the distance between the lens and the image sensor can be changed, and the focus of the image projected onto the image sensor through the lens can be adjusted.

When a reverse current is applied to the coil (1320), the driving magnet (1310) can move to the lower side of the optical axis direction due to the electromagnetic interaction between the coil (1320) and the driving magnet (1310) (see B in FIG. 51). At this time, the holder (1210) can be moved to the lower side of the optical axis direction along with the driving magnet (1310). Furthermore, the lens can be moved to the lower side of the optical axis direction along with the holder (1210). Accordingly, the distance between the lens and the image sensor can be changed, and the focus of the image projected onto the image sensor through the lens can be adjusted.

Meanwhile, during the movement of the driving magnet (1310), the sensor (1330) can detect the strength of the magnetic field of the driving magnet (1310) and detect the amount of movement or position of the lens in the optical axis direction. The amount of movement or position of the lens in the optical axis direction detected by the sensor (1330) can be used for auto-focus feedback control.

The camera device according to the second embodiment of the present invention is described with reference to the drawings.

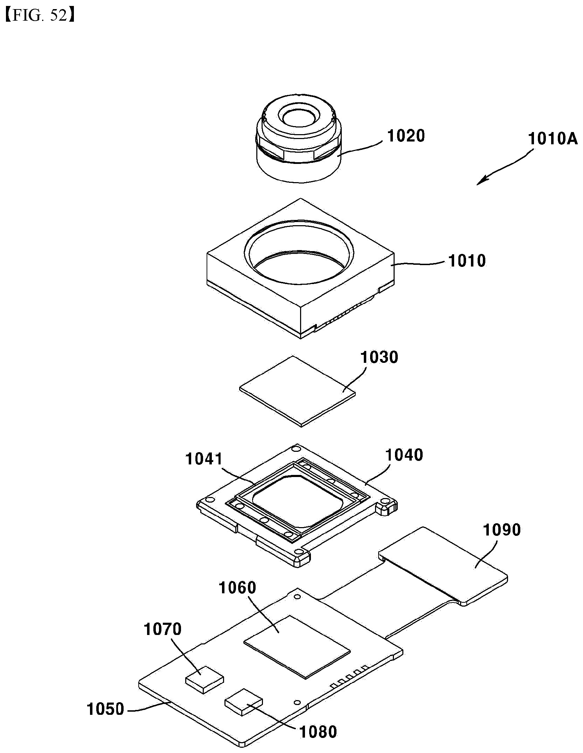

FIG. 52 is an exploded view of the camera device according to the second embodiment of the present invention.

The camera device (1010A) may comprise a camera module.

The camera device (1010A) may comprise a lens module (1020). The lens module (1020) may comprise at least one lens. The lens may be disposed in a corresponding position with that of the image sensor (1060). The lens module (1020) may comprise a lens and a barrel. The lens module (1020) may be coupled to the holder (1210) of the lens driving device (1010). The lens module (1020) may be screwed and/or coupled to the holder (1210). The lens module (1020) can move as a whole with the holder (1210).

The camera device (1010A) may comprise a filter (1030). The filter (1030) may serve to block the incidence of light in a specific frequency band from passing through the lens module (1020) into the image sensor (1060). The filter (1030) may be disposed parallel to the x-y plane. The filter (1030) may be disposed between the lens module (1020) and the image sensor (1060). The filter (1030) may be disposed on the sensor base (1040). As a variant example, the filter (1030) may be disposed on the base (1110). The filter (1030) may comprise an infrared filter. The infrared filter may block the incidence of light in the infrared region on the image sensor (1060).

The camera device (1010A) may comprise a sensor base (1040). The sensor base (1040) may be disposed between the lens driving device (1010) and the printed circuit board (1050). The sensor base (1040) may comprise a protrusion (1041) in which the filter (1030) is disposed. In the portion of the sensor base (1040) in which the filter (1030) is disposed, an opening may be formed to allow light passing through the filter (1030) to enter the image sensor (1060). The adhesive member may be bonded or glued to the base (1110) of the lens driving device (1010) to the sensor base (1040). The adhesive member can additionally serve to prevent foreign matter from entering the interior of the lens driving device (1010). The adhesive member may comprise one or more of epoxy, thermosetting adhesive, and UV-curable adhesive.

In the variant example, the sensor base (1040) may be omitted. In this case, the filter (1030) may be coupled to the base (1110) of the lens driving device (1010). The filter (1030) may be coupled to the lower surface of the base (1110) of the lens driving device (1010). In addition, in the variant example, the sensor holder (1040) may be shaped to protect only the image sensor (1060). In other words, the base (1110) of the lens driving device (1010) can be disposed directly on the printed circuit board (1050). At this time, the sensor holder (1040) may be disposed within the base (1110). The base (1110) may be formed to wrap around the sensor holder (1040). The base (1110) may comprise a leg unit, which is an outer wall that is seated on the printed circuit board (1050).

The camera device (1010A) may comprise a printed circuit board (PCB, 1050). The printed circuit board (1050) may be a substrate or a circuit board. The printed circuit board (1050) may be disposed with the lens driving device (1010). A sensor base (1040) may be disposed between the printed circuit board (1050) and the lens driving device (1010). The printed circuit board (1050) may be electrically connected to the lens driving device (1010). An image sensor (1060) may be disposed on the printed circuit board (1050). The printed circuit board (1050) may be equipped with various circuits, elements, and control units to convert the image captured by the image sensor (1060) into an electrical signal and transmit it to an external device.

The camera device (1010A) may comprise an image sensor (1060). The image sensor (1060) may be configured to receive light incident through a lens and a filter (1030) and to form an image. The image sensor (1060) may be mounted on a printed circuit board (1050). The image sensor (1060) can be electrically connected to the printed circuit board (1050). For example, the image sensor (1060) may be coupled to the printed circuit board (1050) by surface mounting technology (SMT). As another example, the image sensor (1060) may be coupled to the printed circuit board (1050) by flip chip technology. The image sensor (1060) may be disposed so that the lens and the optical axis are aligned. In other words, the optical axis of the image sensor (1060) and the optical axis of the lens may be aligned. The image sensor (1060) can convert the light irradiated on the effective image area of the image sensor (1060) into an electrical signal. The image sensor (1060) may be any one of a CCD (charge coupled device), MOS (metal oxide semiconductor), CPD, and CID.

The camera device (1010A) may comprise a motion sensor (1070). The motion sensor (1070) may be mounted on a printed circuit board (1050). The motion sensor (1070) can be electrically connected to the control unit (1080) through the circuit pattern provided on the printed circuit board (1050). The motion sensor (1070) can output angular velocity information of rotation caused by the movement of the camera device (1010A). The motion sensor (1070) may comprise a two-axis or three-axis gyro sensor, or an angular velocity sensor.

The camera device (1010A) may comprise a control unit (1080). The control unit (1080) may be dispose on the printed circuit board (1050). The control unit (1080) can be electrically connected to the coil (1320) of the lens driving device (1010). The control unit (1080) can individually control the direction, strength, and amplitude of the current supplied to the coil (1320). The control unit (1080) can control the lens driving device (1010) to perform the autofocus function and/or the image stabilization function. Furthermore, the control unit (1080) can perform autofocus feedback control and/or image stabilization feedback control for the lens driving device (1010).

The camera device (1010A) may comprise a connector (1090). The connector (1090) may be electrically connected to a printed circuit board (1050). The connector (1090) may comprise a port for electrically connecting to an external device.

The following describes an optical device according to a second embodiment of the present invention, with reference to the drawings.

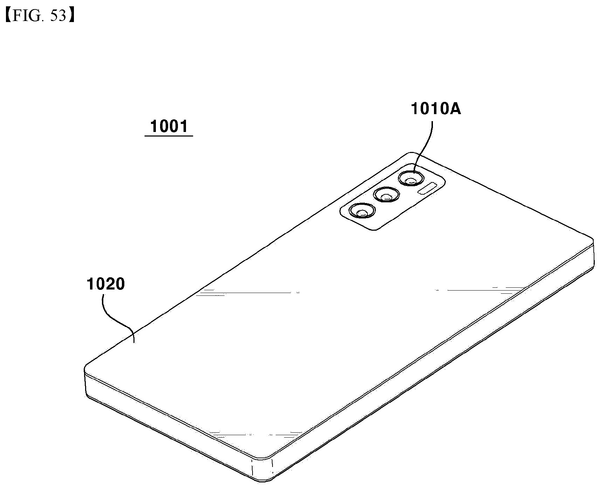

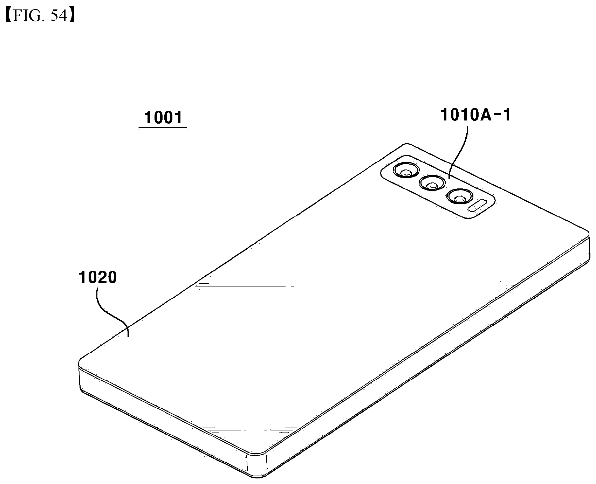

FIG. 53 is a perspective view of an optical device according to a second embodiment of the present invention. FIG. 54 is a perspective view of an optical device according to a variant example.

Optical device (1001) may comprise one or more of a mobile phone, cellular phone, portable terminal, mobile terminal, smart phone, smart pad, portable smart device, digital camera, laptop computer, digital broadcasting terminal, personal digital assistant (PDA), portable multimedia player (PMP), and navigation device. Optical device (1001) may comprise any device for taking images or photographs.

The optical device (1001) may comprise a main body (1020). The optical device (1001) may comprise a camera device (1010A). The camera device (1010A) may be disposed in the main body (1020). The camera device (1010A) may photograph a subject. The optical device (1001) may comprise a display. The display may be disposed in the main body (1020). The display may output one or more of the images and videos captured by the camera device (1010A). The display may be disposed on the first surface of the main body (1020). The camera device (1010A) may be disposed on one or more of the first surface of the main body (1020) and the second surface opposite to the first surface. As shown in FIG. 53, the camera device (1010A) may be a triple camera disposed in a vertical direction. As shown in FIG. 54, the camera device (1010A-1) can be disposed with the triple camera in a horizontal direction.

Although the first and second embodiments of the present invention have been described separately above, some configurations of the first embodiment can be redisposed with corresponding configurations of the second embodiment. Also, some configurations of the second embodiment can be redisposed with corresponding configurations of the first embodiment. Furthermore, the third embodiment of the present invention may comprise some of the configurations of the first embodiment and some of the configurations of the second embodiment. The first embodiment of the present invention may comprise the repulsion magnet (1500) of the second embodiment. In addition, the second embodiment of the present invention may comprise the repulsion magnet (500) of the first embodiment.

The above-described embodiments of the present invention have been described with reference to the drawings, and a person with ordinary skill in the art to which the present invention belongs will understand that the present invention can be implemented in other specific forms without changing its technical ideas or essential features. Therefore, the embodiments described above should be understood to be illustrative and not limiting in all respects.

## Claims

1. A lens driving device comprising:
a fixed unit;
a moving unit disposed in the fixed unit;
a coil disposed on the fixed unit;
a first magnet disposed on the moving unit and configured to interact with the coil;
a second magnet disposed on the fixed unit; and
a ball disposed between the fixed unit and the moving unit,
wherein the second magnet is configured to press the first magnet such that the ball is pressed between the fixed unit and the moving unit.

2. The lens driving device of claim 1, wherein, when current is applied to the coil, the first magnet is configured to move in the optical axis direction.

3. The lens driving device of claim 1, wherein the coil is overlapped with the first magnet in a first axis direction perpendicular to an optical axis direction, and
wherein the second magnet is overlapped with the first magnet in the first axis direction.

4. The lens driving device of claim 3, wherein the second magnet comprises a first portion overlapped with the first magnet in the first axis direction and a second portion non-overlapped with the first magnet in the first axis direction.

5. The lens driving device of claim 3, wherein the second magnet is overlapped with the coil in a second axis direction perpendicular to the optical axis direction and the first axis direction.

6. The lens driving device of claim 1, wherein the second magnet comprises a first unit magnet disposed on one side of the coil and a second unit magnet disposed on the other side of the coil.

7. The lens driving device of claim 1, wherein the second magnet is disposed so that a repulsion is generated with the first magnet.

8. The lens driving device of claim 1, wherein the first magnet comprises a first magnet unit comprising an N pole and an S pole, a second magnet unit comprising an S pole and an N pole, and a neutral unit disposed between the first magnet unit and the second magnet unit.

9. The lens driving device of claim 8, wherein the second magnet comprises a first magnet unit comprising an N pole and an S pole, a second magnet unit comprising an S pole and an N pole, and a neutral unit disposed between the first magnet unit of the second magnet and the second magnet unit of the second magnet,
wherein the N pole of the first magnet unit of the second magnet faces the N pole of the first magnet unit of the first magnet, and
wherein the S pole of the second magnet unit of the second magnet faces the S pole of the second magnet unit of the first magnet.

10. A lens driving device comprising:
a fixed unit;
a moving unit disposed in the fixed unit;
a coil disposed on the fixed unit;
a magnet disposed on the moving unit and configured to interact with the coil; and
a ball disposed between the fixed unit and the moving unit,
wherein the fixed unit comprises a first sidewall disposed with the coil, a second sidewall disposed opposite to the first sidewall, and a protrusion disposed between the first sidewall and the second sidewall and overlapped with the first sidewall and the second sidewall in a first direction in which the first sidewall faces the second sidewall,
wherein, in the first direction, the moving unit comprises a protrusion disposed between the first sidewall of the fixed unit and the protrusion, and
wherein the ball is disposed between the protrusion of the moving unit and the protrusion of the fixed unit.
